(19) **Europäisches Patentamt**

**European Patent Office**

**Office européen des brevets**

(11) **EP 0 594 566 B1**

(12) **EUROPEAN PATENT SPECIFICATION**

(45) Date of publication and mention
of the grant of the patent:
**01.09.1999 Bulletin 1999/35**

(21) Application number: **90909542.4**

(22) Date of filing: **11.06.1990**

(51) Int. Cl.$^6$: **A23L 3/32**, A23L 3/005

(86) International application number:
**PCT/US90/03299**

(87) International publication number:
**WO 90/15547 (27.12.1990 Gazette 1990/29)**

(54) **HIGH PULSED VOLTAGE SYSTEMS FOR EXTENDING THE SHELF LIFE OF PUMPABLE FOOD PRODUCTS**

GEPULSTE HOCHSPANNUNGSSYSTEME ZUR VERLÄNGERUNG DER HALTBARKEIT VON PUMPFÄHIGEN NÄHRMTTELN

SYSTEMES D'IMPULSIONS A HAUTES TENSION PERMETTANT DE PROLONGER LA DUREE DE CONSERVATION DE PRODUITS ALIMENTAIRES SUSCEPTIBLES D'ETRE POMPES

(84) Designated Contracting States:
**DE ES FR GB IT**

(30) Priority: **12.06.1989 US 365082**

(43) Date of publication of application:
**04.05.1994 Bulletin 1994/18**

(73) Proprietor:
**PUREPULSE TECHNOLOGIES, INC.
San Diego, CA 92123 (US)**

(72) Inventors:
• **BUSHNELL, Andrew, Hugh
San Diego, CA 92124 (US)**
• **DUNN, Joseph, Edward
Rancho La Costa, CA 92009 (US)**

• **CLARK, Reginald, Wayne
Del Mar, CA 92014 (US)**

(74) Representative:
**Cross, Rupert Edward Blount et al
BOULT WADE TENNANT,
27 Furnival Street
London EC4A 1PQ (GB)**

(56) References cited:
WO-A-88/03763          WO-A-88/03763
DE-C- 858 872          FR-A- 2 513 087
US-A- 1 934 704        US-A- 4 434 357
US-A- 4 457 221        US-A- 4 522 834
US-A- 4 608 920        US-A- 4 612 199

EP 0 594 566 B1

Printed by Xerox (UK) Business Services
2.16.7/3.6

## Description

Background of the Invention

The present invention is directed to methods and apparatus for preserving fluid foodstuffs, and more particularly is directed to such methods and apparatus for extending the shelf life of perishable fluid foodstuffs such as dairy products, fruit juices and liquid egg products, which are growth media for microorganisms. The present invention is also directed to preserved liquid foodstuffs which have extended shelf life.

Substantial technical effort has been directed to the preservation of perishable fluid food products such as milk products, natural fruit juices and liquid egg products which may normally contain a wide variety of microorganisms, and which are excellent culture media for microorganisms.

Practical preservation methods which have found significant commercial application predominantly utilize heat treatment such as pasteurization to inactivate or reduce the microorganism population. For example, milk products are conventionally pasteurized at a minimum temperature of at least about 72° C. for 15 seconds (or equivalent time/temperature relationship) to destroy pathogenic bacteria and most of the nonpathogenic organisms, with degradative enzyme systems also being partial or totally inactivated. However, products processed in this manner are still generally nonsterile and have limited shelf life, even at refrigeration temperature. The shelf life of liquid foodstuffs may be substantially extended by higher heat treatment processes such as "ultra high pasteurization", or "ultra high temperature ("UHT") such as treatment of from about 94° C. for 3 seconds to about 150° C. for one second in conjunction with aseptic packaging to achieve complete destruction of all bacteria and spores. However, such heat treatment typically adversely affects the flavor of the food product, at least partially denatures its protein content or otherwise adversely affects desired properties of the fluid food product. Other approaches to liquid food preservation, which also have certain disadvantages, include the use of chemical additives or ionizing radiation.

The bactericidal effects of electric currents have also been investigated since the end of the 19th century, with various efforts having been made to utilize electrical currents for treating food products, such as described in U.S. Patents 1,900,509, 2,428,328, 2,428,329 and 4,457,221 and German Patents 1,946,267 and 2,907,887. The lethal effects of low-frequency alternating current with low electric field strength have been largely attributed to the formation of electrolytic chemical products from the application of current through direct contact electrodes, as well as ohmic heating produced by current flow through an electrically resistive medium. As described in U.S. Patent 3,594,115, lethal effects of high voltage arc discharges have also been attributed to electrohydraulic shock waves. However, such electrolytic chemical products may be undesirable in fluid foodstuffs, and the utilization of explosive arc discharges to produce microbiologically lethal shock waves has not found wide-spread application in the provision of edible liquid foodstuffs having extended shelf life.

More recently, separately from the art of food preservation, the effect of strong electric fields on microorganisms in nonnutrient media has been studied as a mechanism for reversibly or irreversibly increasing the permeability of the cell membrane of microorganisms and individual cells [Sale, et al., "Effects of High Electric Fields on Microorganisms III. Lysis of Erythrocytes and Protoplasts", Biochmica et Biophysica Acta, 163, pp. 37-43 (1968); Hulsheger, et al., "Killing of Bacteria with Electric Pulses of High Field Strength", Radiat. Environ Biophys, 20, pp. 53-65 (1981); Hulsheger, et al., "Lethal Effects of High-Voltage Pulses on E. coli K12", Radiat. Environ. Biophys. 18, pp. 281-288 (1980); Zimmermann, et al., "Effects of External Electrical Fields on Cell Membranes", Bioelectrochemistry and Bioenergetics, 3, pp. 58-63 (1976); Zimmermann, et al., "Electric Field-Induced Cell-to-Cell Fusion", J. Membrane Biol., 67, pp. 165-182 (1982); Hulsheger, et al;., "Electric Field Effects on Bacteria and Yeast Cells", Radiat. Environ. Biophys; 22, pp. 149-162 (1983); U. Zimmermann, et al., "The Development of Drug Carrier Systems: Electrical Field Induced Effects in Cell Membranes", Biochemistry and Bioenergetics, 7, pp. 553-574 (1980); Jacob, et al., "Microbiological Implications of Electric Field Effects II. Inactivation of Yeast Cells and Repair of Their Cell Envelope", Zeitschrift fur Allgemeine Mikrobiologic, 21, 3. pp. 225-233 (1981); Kinositas, Jr., "Formation and Resealing of Pores of Controlled Sizes in Human Erythrocyte Membrane", Nature, 268, 4. pp. 438-440 (August, 1977); Neamann, et al., "Gene Transfer into Mouse Lyoma Cells by Electroporation in High Electric Fields", IRI Press Limited, Oxford, England, pp. 841-845]. The application of high electric fields to reversibly increase the permeability of cells has been used to carry out cell fusion of living cells and to introduce normally excluded components into living cells. Electric fields in nonnutrient media have a direct lethal effect upon microorganisms with the rate of kill dependent upon the field strength above a critical field level and the duration of the applied high voltage pulse or pulses.

These studies postulate the cell membrane as the site of a critical effect, of reversible or irreversible loss of membrane function as the semipermeable barrier between the cell and its environment. An external field of short duration is assumed to induce an imposed transmembrane potential above a critical electric field value, which may produce a dramatic increase of membrane permeability. Because an increase in cell permeability prevents the counteracting of differences in osmolality of the cell content and surrounding media, exchange or loss of cell contents, cell lysis and irreversible destruction may occur as secondary mechanisms in non-nutrient media which limit the ability of cells to repair themselves, and which adversely affect permeable cells through osmotic pressure differences between the medium and the interior of the cell.

DE-858872 describes a arrangement for treating bulk material in an electric alternating field. The apparatus comprises a pair of coaxial electrodes which are designed so that they form surfaces of coaxial cones or pyramids. Such an arrangement makes it possible to vary the electric field strength by varying the axial displacement between the electrodes. The angle of inclination of the electrodes can be adjusted to the angle of repose of the material to prevent the bulk material from creeping or slipping through the treatment chamber Material which is to be treated, e.g. melted, is introduced between the electrodes through a dielectric container adjoining the outer electrode.

U.S. Patent No. 4,838,154 and U.S. Patent No. 4,695,472 identified hereinabove, are directed to methods and apparatus for providing fluid food products having extended shelf life. However, improved methods and apparatus of this type would be desirable, particularly such methods and apparatus having improved performance and efficiency. Accordingly, it is an object of the present invention to provide methods and apparatus for extending the shelf life of perishable pumpable food products such as dairy products, natural fruit juices, pumpable fluid egg products, beer, wine, soups, stews, gravies, particulate food suspensions or slurries and other pumpable food products.

According to the present invention there is provided a pulsed electric field treatment apparatus for preservation of a pumpable foodstuff comprising an electric field treatment cell comprising a first electrode means for making electric contact with pumpable foodstuff disposed adjacent said first electrode means in said treatment cell and a second electrode means spaced apart from said first electrode means and for making electric contact with pumpable foodstuff disposed in said treatment cell between said first electrode means and said second electrode means, solid dielectric separator means separating the first and second electrode means; inlet conduit means for introducing a pumpable foodstuff to be treated into said electric field treatment cell and outlet conduit means for discharging food product which has passed through said treatment cell; means for applying high voltage electric pulses to said first and second electrode means at a predetermined rate to provide an electric field between said electrode means through a pumpable foodstuff located therebetween in said treatment cell of at least 20,000 volts per centimetre or more; and means for pumping a pumpable foodstuff through said inlet conduit means at a rate such that all of said pumpable foodstuff is subjected to at least one pulse in transit through said treatment cell before it is conducted from the treatment cell through said outlet conduit means characterized in that said dielectric separator means is arranged to secure said second electrode means within and spaced apart from said first electrode means, said treatment cell including a substantially uniform electric field treatment zone, in which said first and said second electrode means are spaced apart by a substantially uniform distance.

Various embodiments of the present invention are defined by the dependent claims.

Examples of embodiments of the present invention will now be described with reference to the drawings, in which:

FIGURE 1 is a schematic illustration of an embodiment of a continuous product flow processing system for extending the shelf life of perishable pumpable foodstuffs utilizing a treatment system capable of applying very high electric field stress to a pumpable food product in accordance with the present invention;

FIGURE 2 is a cross sectional side view, taken through the axis of rotational symmetry, of an embodiment of a pulsed electric field treatment processing cell having a modified coaxial geometry designed to provide for increased pulse stability, which may be utilized in the system of FIGURE 1;

FIGURE 3 is a cross sectional side view, taken through the axis of rotational symmetry, of another embodiment of a pulsed electric field treatment processing cell which may be used in the apparatus of FIGURE 1 having a coaxial geometry with a long tracking path on the insulation surface separating the two high voltage electrodes, which may be utilized in a continuous flow processing system of the type illustrated in FIGURE 1;

FIGURE 4 is a schematic cross sectional view, taken through the axis of rotational symmetry, of an embodiment of a static pulsed electric field batch treatment test cell which is particularly designed for applying very high voltage pulsed electric fields to perishable liquid food products together with an electrical schematic diagram of high voltage pulse generation circuitry for the test apparatus;

FIGURE 5 is an electric field plot of the batch high voltage batch treatment cell of FIGURE 4 showing field distribution equipotential lines calculated for application of a high voltage pulse across the cell electrodes;

FIGURE 6 is a schematic illustration of a high voltage power supply and pulse forming network for applying high voltage pulses to the test cell of FIGURE 4.

FIGURE 7 is an oscilloscope trace of the pulse forming network of FIGURE 6 operating in a short circuited load;

FIGURE 8 is an oscilloscope trace illustrating the typical pulse forming network rise time for a 20 ohm load for the network of FIGURE 6;

FIGURE 9 is an oscilloscope trace of the rise time of the pulse forming network with a 20 ohm load;

FIGURE 10 is a voltage vs. time oscilloscope trace of the output of the network of FIGURE 6 applied to a one ohm-cm salt solution;

EP 0 594 566 B1

FIGURE 11 is a voltage vs. time oscilloscope trace of the output of the network of FIGURE 6 applied to a 300 ohm-cm salt solution;

FIGURE 12 is a voltage vs. time oscilloscope trace of the output of the network of FIGURE 6 applied to apple Juice;

FIGURE 13 is a voltage vs. time oscilloscope trace of the output of the network of FIGURE 6 applied to milk;

FIGURE 14 is a voltage vs. time oscilloscope trace of the output of the network of FIGURE 6 applied to unfiltered orange juice;

FIGURE 15 is a voltage vs. time oscilloscope trace of the output of the network of FIGURE 6 applied to filtered orange juice;

FIGURE 16 is a voltage vs. time oscilloscope trace of the output of the network of FIGURE 6 applied to deionized water;

FIGURE 17 is a schematic diagram of a pulsed electric field configuration for defining design analysis;

FIGURE 18 is a schematic diagram of a continuous pulser system showing the pulse forming network;

FIGURE 19 is a graphic representation of the resistance of a pulsed electric field cell as a function of product resistivity;

FIGURE 20 is a graphic representation of the electric field produced by a pulse forming network as a function of product resistivity in a pulsed electric treatment cell;

FIGURE 21 is an illustration of the electric field waveform produced by a 1.0 ohm load on a 5-section pulse forming network;

FIGURE 22 is an illustratrion of the electric field waveform produced by a 1.6 ohm load on a 3-section pulse forming network;

FIGURE 23 is an illustration of the electric field waveform produced by a 1.0 ohm load on a 3-section pulse forming network;

FIGURE 24 is a cross sectional view through the axis of rotation of a rotationally symmetrical pulsed electric field cell similar to that of FIGURE 2, configured for flow testing:

FIGURE 25 is an equipotential plot of a pulsed electric field cell;

FIGURE 26 is a plot of the electric field on the ground electrode of the pulsed electric field cell; and

FIGURE 27 is a plot of the electric field on the high voltage electrode of the pulse electric field cell.

Generally in accordance with embodiments of the present invention, methods and apparatus are provided for preserving fluid foodstuffs which are normally excellent bacteriological growth media, by applying very high voltage electrical field pulses of very short duration through all of the foodstuff. By "pumpable foodstuff" is meant an edible, food product having a viscosity or extrusion capacity such that the food product may be forced to flow through a treatment zone. The products include extrudable products, such as doughs or meat emulsions, fluid products such as beverages, fluid dairy products, gravies, sauces and soups, and food-particulate containing food slurries such as stews, and food-particulate containing soups, and cooked or uncooked vegetable or grain slurries. Desirably, the liquid phase of product will have a viscosity of less than 1000 poise, and preferably less than 500 centipoise, at a temperature above 0° C. Typically, the pumpable food products may comprise in the range of from 20 to 95 percent by weight water, and from 4 to 75 percent by weight of solids selected from the group consisting of proteins, carbohydrates and fats, and mixtures thereof, based on the total weight of the foodstuff. The viscosity of the foodstuff may generally best be determined at ambient temperature (e.g., about 23° C.) or an elevated processing temperature (e.g., 65° C.). By "bacteriological growth medium" is meant that upon storage at a temperature in the range of 10° C. to about 30° C., the fluid foodstuff, with its indigenous microbiological population or when seeded with test organisms, will demonstrate an increase in biological content or activity as a function of time as detectable by direct microscopic counts, colony forming units on appropriate secondary media, metabolic end product analyses, biological dry or wet weight or other qualitative or quantitative analytical methodology for monitoring increase in biological activity or content. For example, under such conditions the microbiological population of a pumpable foodstuff which is a bacteriological growth medium may at least double over a time period of two days. The fluid foodstuffs will have an electrical conductivity of at least .0001 mhos cm$^{-1}$, although deionized food products may also be treated which have lower conductivities. Typically, pumpable food products may have a combined sodium and potassium content of at least .10 weight percent, based on the total weight of the fluid foodstuff. It is noted that deionized water may be used as a slurrying agent for the high pulsed electric field treatment of particulate cooked, hydrated, uncooked or unhydrated food products, as will be described in more detail hereinafter. The compositions of typical fluid food products which are biological growth media, derived from "Nutritive Value of American Foods in Common Units", Agriculture Handbook No. 456 of the U.S. Department of Agriculture (1975), are as follows:

4

| Fluid Food Product | FLUID FOODSTUFFS | | | | | |
|---|---|---|---|---|---|---|
| | Water Wt % | Protein Wt % | Fat Wt % | Carbohydrate Wt % | Na Wt % | K Wt % |
| Whole Milk (3.5t fat) | 87.4 | 3.48 | 3.48 | 4.91 | .05 | .144 |
| Yogurt ** | 89.0 | 3.40 | 1.68 | 5.22 | .050 | .142 |
| Raw Orange Juice | 88.3 | .685 | .20 | 10.0 | .0008 | .2 |
| Grape Juice | 82.9 | .001 | trace | .166 | .0019 | .115 |
| Raw Lemon Juice | 91.0 | .41 | .20 | 8.0 | .0008 | .14 |
| Raw Grapefruit Juice | 90.0 | .48 | .08 | 9.18 | .0008 | .16 |
| Apple Juice | 87.8 | .08 | trace | 11.9 | .0008 | .10 |
| Raw Whole Eggs | 73.7 | 12.88 | 11.50 | .90 | .12 | .13 |
| Fresh Egg Whites | 87.6 | 10.88 | .02 | .79 | .15 | .14 |
| Split Pea Soup * | 70.7 | 6.99 | 2.60 | 16.99 | .77 | .22 |
| Tomato Soup * | 81.0 | 1.60 | 2.10 | 12.69 | .79 | .187 |
| Tomato Catsup | 68.6 | 2.0 | .588 | 25.4 | 1.04 | .362 |
| Vegetable beef soup | 91.9 | 2.08 | .898 | 3.9 | .427 | .066 |

\* condensed - commercial
\*\* from partially skimmed milk

Embodiments of the present invention are directed to methods and products which may utilize extremely high electric field pulses of short, controlled pulsed durations. Such fields may be applied by means of treatment cells of high field stability design which will be described in detail herein. Various embodiments of such methods and apparatus may use electric field processing to both preserve and heat for the combined benefit of electric field treatment at slightly elevated temperature. Single pulse treatment may be employed for various food products. Processible foodstuffs include low viscosity products such as beverages, as well as thick, viscous, particulate and mixed liquid-particulate edibles. The use of de-gassing methods and apparatus to facilitate the use of high electric fields is another aspect of the present methods and apparatus which will be discussed in more detail hereinafter.

As indicated, in accordance with embodiments of the present invention, all of the pumpable fluid foodstuff is subjected to at least one very high field and current intensity electric pulse, and at least a portion of the fluid foodstuff may desirably be subjected to a plurality of very high voltage electric pulses in a high stability electric pulse treatment zone. The pumpable food product may be subjected to such very high voltage short duration pulses by a variety of processing techniques. In one such processing method, the liquid foodstuff is introduced into a treatment zone between two electrodes which have a configuration adapted to produce a substantially uniform electric field therebetween without dielectric tracking or other breakdown. Very high voltage electric pulses may be applied to the electrodes to subject the liquid foodstuff to the multiple pulse treatment by pulsed field apparatus such as lumped transmission line circuits, Blumlein transmission circuits and/or capacitive discharge circuits. Field reversal techniques may also be utilized by capacitive discharge systems and pulse forming networks to increase the effective potential across the cell. Thus, by applying a short pulse of, for example, 20,000 kilovolts per centimeter across a treatment cell for a short period of time (e.g., 2 microseconds) of one polarity, followed by abrupt reversal of the applied potential within a short time period (e.g., 2 microseconds), an effective field approaching 40 kilovolts per centimeter may be developed across the cell. If the liquid foodstuff is continuously introduced into the treatment zone to which very high voltage pulses are periodically applied, and fluid foodstuff is concomitantly withdrawn from the treatment zone, the rate of passage of the liquid foodstuff through the treatment zone should be coordinated with the pulse treatment rate so that all of the pumpable foodstuff is subjected to at least one pulse within the treatment zone. The liquid foodstuff may be subjected to treatment in a sequential plurality of such treatment zones, as will be described in more detail hereinafter.

In accordance with one embodiment of the present invention, pulsed field treatment apparatus for preservation of pumpable foodstuffs is provided comprising an electric field treatment chamber comprising a first electrode means for making electrical contact with liquid foodstuff disposed adjacent said first electrode means in said chamber, a second electrode means spaced apart from said first electrode means for making electrical contact with liquid foodstuff disposed in said chamber between said first electrode means and said second electrode means, solid dielectric separator means comprising a dielectric nonconductive spacer separating said first electrode means and said second electrode means externally of said chamber and having a minimum surface pathway length between said first electrode means, and said second electrode means of at least twice, and preferably at least 3 times the minimum distance between said first electrode means and said second electrode means in said chamber. The electrodes will also desirably be constructed such that the electric field strength at the edges of the electrode (upon application of a pulsed electric potential) does not exceed 1-5 times the average electric field over the surface of the electrode. This may be accomplished by proper electrode design, as will be discussed hereinafter, as by rounding the electrode edges to prevent undesirable field enhancement at sharp edges of small radius of curvature. The apparatus further comprising an inlet conduit means for introducing a pumpable foodstuff to be treated into said electric field treatment chamber, an outlet conduit means for discharging food product which has passed through said treatment chamber, means for applying high voltage electrical pulses to said first and second electrode means at a rate of at least 0.01 pulse per second and preferably at least 2 pulses per second to provide an electric field between said electrodes through a pumpable foodstuff located therebetween of at least 25,000 volts per centimeter, and more preferably at least 35,000 volts per centimeter. The apparatus further includes means for pumping a foodstuff through said inlet conduit means at a rate such that all of said fluid foodstuff is subjected to at least one pulse in transit through said high voltage treatment zone before it is conducted from the chamber through said outlet conduit means. Such apparatus may further include means for heating the foodstuff to a predetermined temperature of at least 45° C., and more preferably at least 55° C. before introduction to the treatment chamber, and may further include means for cooling the fluid foodstuff which has passed through said one or more treatment zones to a refrigeration temperature in the range of from 0 to 10° C.

If desired, the first and second electrode means may be constructed to prevent direct electrolysis of the fluid foodstuff upon application of a pulsed electric field thereto. In this regard, such electrodes may comprise an electrically conductive electrolysis electrode, an ion permeable membrane and an intermediate electrolyte, such that ionic electrical connection is made with the fluid foodstuff through the ion permeable membrane rather than by direct contact with the electronically conductive electrode, as described in U.S. Patent No. 4,695,472.

As indicated, in accordance with embodiments of the present invention, methods and apparatus are provided for processing of pumpable liquids, including thick and viscous fluids, solutions, slurries and/or mixtures of liquids and solid particulates with pulsed electric fields. The reliability, efficacy, range, and ease of electric field processing are augmented and extended by specific electrical equipment and design principles which permit application of high strength electric fields greater than about 25 kV/cm, with short pulse duration to reduce the required or desirable number of treatment pulses to achieve a desired level of preservation. Such method and apparatus may provide improved processing economics, greater flexibility in equipment design and engineering, the use of single pulse processing, an extension of the range of organisms and structures amenable to electric field processing, and an increase in efficiency of the process due to the reduction of energy required.

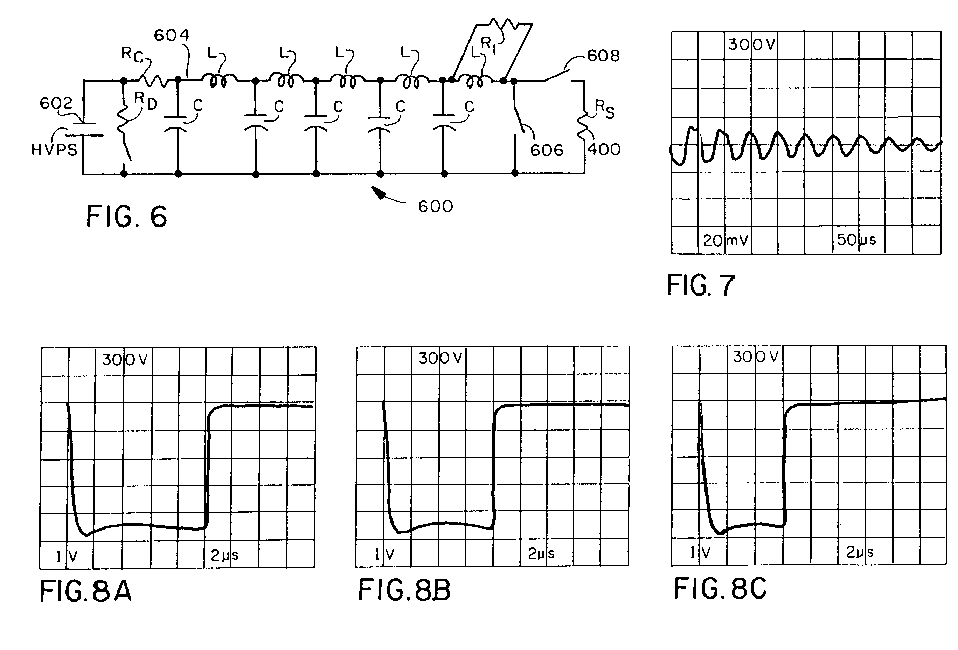

In apparatus such as that described in FIGURE 6 of the above-identified U.S. Patent No. 4,695,472, the maximum electric field that could be applied to the liquids tested tended to be limited to about 20 kV/cm by the onset of electrical breakdown in the test chamber at higher electric fields for pulse durations of about 20 microseconds or greater. At high field strengths, the uniformity of the electric field and current density through the fluid foodstuff degrades as a function of time, with a tendency to produce arcs or current filaments. In addition, however, it was determined that such breakdowns occurred at the interface between the liquid and the dielectric insulator separating the two high voltage electrodes.

In accordance with embodiments of the present invention, high electric field processing methods and apparatus are provided which utilize a treatment chamber or zone which provides for uniform field development and which separates the dielectric/liquid interface from the high electric field region so that electric fields much higher than 20 kV/cm can be applied to fluids. Also in accordance with such methods and apparatus, the pulse duration is controlled to prevent electrical breakdown of the food product. In this manner, very high electric fields such as pulsed fields in the range of from 25 to 100 kV/cm or more can be successfully applied to liquids and pumpable foods. Since the microbiological kill depends strongly on the electric field strength , such treatment methods and apparatus provide significant improvements in microbiological effects and may extend the range of organisms and structures affected by processing, and otherwise increase the effectiveness and effects of treatment.

It is important that the treatment region be designed to provide a high, relatively spatially uniform electric field in the treatment zone, while minimizing the capacity or conditions for electrical breakdown. To accomplish this, in accordance with various embodiments of the present invention, the insulator separating electrodes of appropriate electrical polarity is removed from the high field region to avoid breakdown produced by electrical tracking or flashover along the insulator surface. It is also important that the electrode surfaces be designed to minimize field enhancement since such field enhancement increases the electric field locally and can result in electrical breakdown. In accordance with continuous flow treatment aspects of the various embodiments, the treatment electrodes and treatment zone defined therebetween may be rotationally symmetrical about a central axis of rotation, as will be described in more detail. In addition, it is important that all of the liquid or other pumpable food product receive adequate treatment and that none of the liquid or pumpable food be permitted to receive less than the full treatment necessary to obtain the desired microbiological results. By coordinating the pulse repetition rate with the continuous flow treatment chamber design, such a treatment regimen can be assured.

As indicated treatment chambers are provided in accordance with the various embodiments, which are designed to minimize the potential for electrical breakdown along the insulator surface separating the two electrodes. The potential for electrical breakdown at the insulator can be minimized by (1) removing the insulator from the region of high electric field, (2) removing the "triple point", (i.e., the interface between the electrode, insulator, and liquid or pumpable food) from the high field region, (3) increasing the length of the insulator (4) placing the insulator at an angle to the electric field, and/or (5) reducing electric field enhancement by appropriate design of the shape of the electrodes. These design principles are instrumental to successful processing at high electric field strengths.

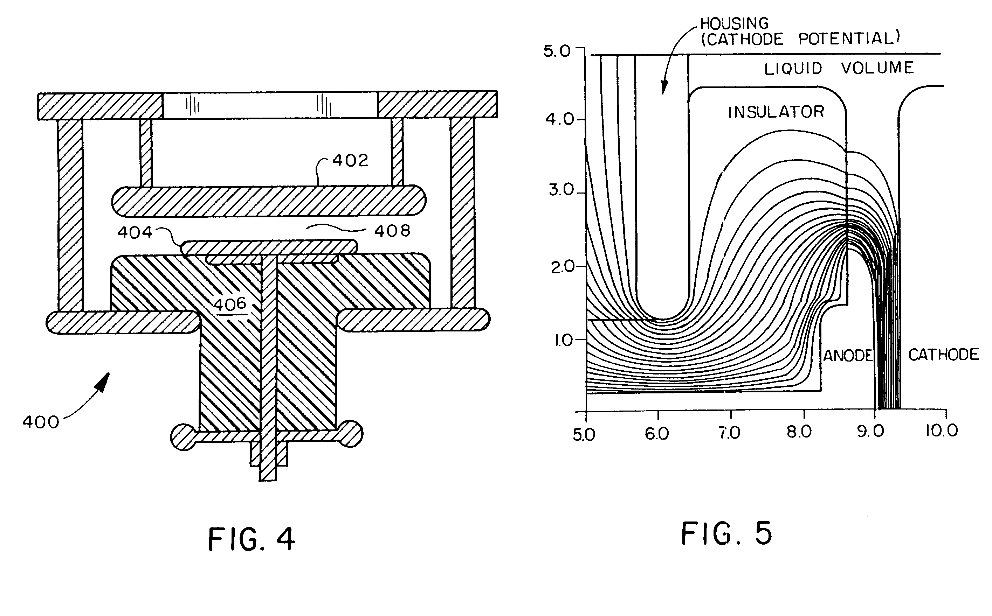

A batch processing chamber 400 incorporating uniform high field design principles in which the electrodes are oriented in a parallel plate geometry is shown in cross section FIGURE 4. The chamber 400 has parallel circular electrode plates 402, 404 which define a treatment zone for a stationary food product. Although food products may be treated under batch conditions, in order to treat liquid and other pumpable foods in a commercially effective manner, it is desirable to flow products through a treatment region where a pulsed high electric field is applied.

However, high electrical pulsed field treatment chambers designed to permit high electric field strength processing of flowing pumpable foods are desirable for volume processing. In such systems, each element of the product flows through a treatment region bounded by coaxially aligned electrodes where a high electric field is applied. In the coaxial geometry chamber design in which an inner cylindrical electrode surrounded by an outer annular cylindrical electrode with the treated volume confined or flowing between, field fringing or loss of effective field strength at each end of the cylindrical treatment chamber may be a serious disadvantage. Unless the length of the treated volume is very long compared to its diameter, this arrangement will result in low efficiency. If, on the other hand, the treatment chamber is very long compared to its diameter, it will have very low electrical resistance for pumpable foods with even moderately low resistivity creating difficulty in the electrical pulser design. However, by use of appropriate design techniques, high performance coaxial treatment cell designs may be provided.

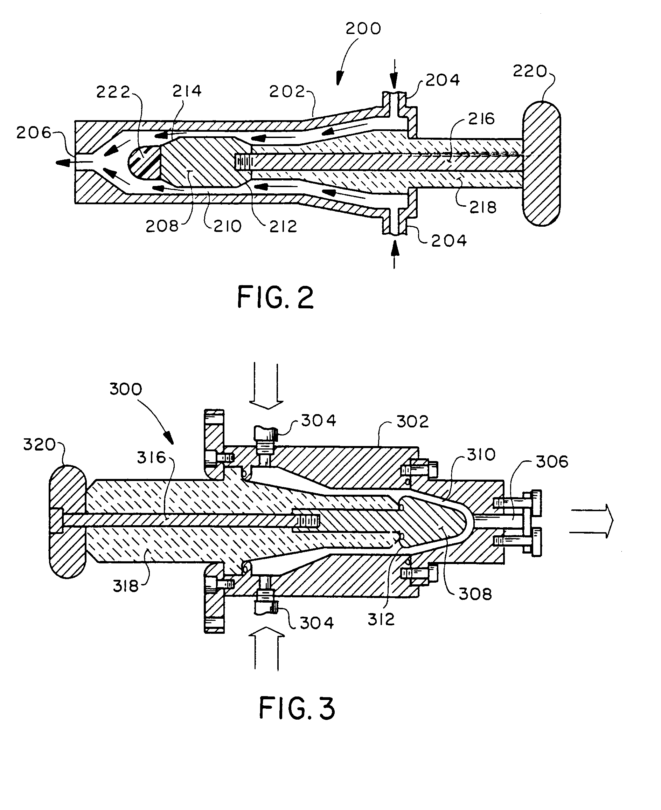

In this regard, the pulsed field treatment cells illustrated in FIGURES 2 and 3 are coaxial treatment chambers which are effective for high voltage pulse treatment. In these modifications, one end of the coaxial arrangement is closed, except for the inclusion of an inlet or outlet port. Field fringing is reduced by the design and can be further reduced with the proper choice of materials. Additionally, the design incorporates features which can be used to control fluid and particulate flow patterns to minimize eddying and reduce mixing between treated and untreated product regions.

The design principles described herein for the high electric field processing of pumpable foods may be incorporated in other geometric arrangements which include but are not limited to radial disc geometries, spherical geometries, concentric cylinders with elliptical or other non-circular cross sections. Such high field pulse treatment cells may use electrical design principles listed above to minimize the potential for electrical breakdown, use proper contours in the flow channel to control fluid and particulate flow patterns to optimize treatment, use an appropriate geometry to assure that all elements of the pumpable food must pass through the electric field treatment zone before exiting the treatment chamber, and use electrodes designed to minimize the loss of efficiency due to electric field fringing in regions near the ends of the treatment zone.

Control of pulse duration is an important aspect of embodiments of the present invention. The use of high electric fields with short pulse duration which may be provided through the use of high field treatment chambers as described herein, may be utilized to produce increased efficiency of treatment of pumpable foods. In this regard, the electrical energy consumed in each pulse is:

$$W = \frac{E^2}{p} \tau V,$$

where W is the electrical energy in joules, E is the electric field in volts per centimeter, p is the electrical resistively in ohm centimeters, $\tau$ is the pulse duration in seconds, and V is the treated volume in cubic centimeters. Since the microbiological kill is a very strong function of electric field and a much weaker function of the pulse duration, it is possible to increase the electric field E and reduce the pulse duration t in accordance with the present disclosure so that the product $E^2\tau$ is reduced, and the energy consumption is therefore reduced, but the microbiological kill is significantly increased.

In addition, electrochemical effects can be minimized through the use of short pulses and high electric field. The electrochemical effects (e.g., electrolysis) depend on the electrical charge transferred. The electric charge transferred per unit area is given by:

$$Q = \frac{\tau w}{p},$$

where w is the electrical input energy per unit volume. Thus, reducing the pulse duration, even at constant electrical input energy, reduces the electrical charge transfer and electrochemical effects.

Desirably, the pulse duration will be in the range of from 0.01 microseconds to 10 microseconds at pulsed field strengths in excess of 30 kV/cm. The use of treatment zone electric field pulses above 25 kV/cm or more preferably above about 35 kV/cm and one or multiple pulses with pulse durations of from 10 nanoseconds to 20 microseconds, and preferably in the range of from 0.1 to 10 microseconds duration can be expected to result in significant increases in the effectiveness of the process, improvements in the efficiency and economy of the process, and reduction of electrolytic effects.

In accordance with the present methods, a long tracking pathway electrode treatment zone having a first electrode and a second electrode defining a substantially uniform electric field treatment zone therebetween and a nonconductive dielectric insulator separating the first electrode from the second electrode externally of the treatment zone by a surface route distance at least twice the minimum distance between the first and second electrodes in the treatment zone. Further in accordance with such methods, all of the pumpable foodstuff is introduced into the long tracking pathway electrode treatment zone and is subjected to at least one high electric field pulse, having a minimum field strength of at least 25,000 volts per centimeter, and preferably at least 35,000 volts per centimeter, and having a duration of from .1 microsecond to 25 microseconds to provide a high electrically field stressed pumpable foodstuff. All of the pumpable foodstuff should be subjected to at least 1 high electric field pulse, and desirably at least 2 pulses in many food preservation systems. The treatment interval between pulses should desirably be less than one minute, and preferably less than one second. By the "duration" of an electric field pulse is meant the length of time the electric field exceeds the minimum field strength. As indicated, all of the electrically stressed fluid foodstuff should be subjected to at least one multiple pulse treatment.

It is also desirable that the pumpable foodstuff be subjected concomitantly with the high voltage electric field pulses, to pulses of high electrical current density uniformly through the foodstuff in the treatment zone having a duration of at least 0.01 microsecond, and preferably in the range of from 0.1 microsecond to 25 microseconds. Typically, for pumpable fluid food products having an electrical resistivity in the range of from 1 to 1000 ohm-centimeters, the peak current density of the current pulses should be at least 5 amperes per square centimeter, and more preferably at least 15 amperes per square centimeter through the food product in its long tracking pathway, high voltage electrode treatment zone.

The electrically stressed pumpable fluid foodstuff should be maintained under substantially sterile conditions, and may be packaged to provide a packaged food product having extended shelf life. Desirably, the electrically stressed fluid foodstuff may be maintained and packaged under aseptic conditions after being subjected to the pulsed electric field treatment.

In order to maintain high electric fields in the treatment chamber, it is also important that the pumpable food product be void-free. In addition, it is desirable that the capacity of the food product to evolve gas bubbles under electric field treatment conditions be minimized. Accordingly, high electric field processing methods should best include the control of gases absorbed in the pumpable food. The effect of absorbed gas in the pumpable food is to cause electrical breakdown in the pumpable food. This can be avoided by degassing the pumpable food by means of a vacuum pump and a degassing arrangement or other method to remove the suspended dissolved or trapped gas from the pumpable food. Another approach which helps minimize the potential for electrical breakdown in the pumpable food is to perform the treatment with the pumpable food under pressure. Use of positive pressure on the pumpable food reduces the formation of gas bubbles in the pumpable food which can lead to electrical breakdown when high electric fields are applied and generally reduces the likelihood of electrical breakdown. The use of positive pressure also permits operation at temperatures above the atmospheric boiling point. Pressures up to 6.9 MPa (1000 psi) or more may be used in the treatment chamber.

In accordance with various preferred embodiments of the present invention, the temperature at which the fluid foodstuff is treated may be controlled to substantially increase the shelf life of the treated product. In this regard, all of the food product may be subjected to at least one such high voltage uniform electric field pulse at a temperature of at least 45° C. and more preferably, at least 55° C. as described in U.S. Patent No. 4,695,472. By subjecting the fluid food product to pulsed electric field treatment at pasteurization temperatures, such as in the range of from 63 to 75°C., substantially improved shelf life extensions may he achieved over those obtained by pasteurization alone, without the adverse effects on the fluid food product which result from UHT treatment at high temperature. However, at such elevated temperatures even below pasteurization temperatures (e.g., 45-63° C.), substantial synergsitic improvement in food preservation and shelf life extension may be provided. In addition, by promptly cooling the electric field treated liquid foodstuff to a refrigeration temperature of less than 10°C., and preferably in the range of from 0°C to 9° C., further substantial improvement in shelf life may be obtained, and the process made more effective. As described in the above-identified U.S. Patent 4,695,472, desirably, the food product should be cooled to refrigeration temperature within 30 minutes, and preferably within 3 minutes of the electric field treatment. The high voltage electrical field treated fluid foodstuff may be rapidly cooled by means of continuous flow heat exchange units prior to packaging or bulk storage. In this manner, it is believed that electrically treated organisms having cell wall damage may be cooled to an inactive condition before cell wall repair may be accomplished, thereby enhancing the product shelf life.

Electric field treatment should best be carried out with pulses having an electric field strength in the range of at least 25 kilovolts per centimeter and preferably in a range of from 35 to 120 kilovolts per centimeter. Depending upon the application, i.e., the selective killing of a particular organism versus the broad spectrum killing of mixed bacterial populations, pulse duration should best be in the range of from 0.1 to 25 microseconds with the most preferred values between 5 and 10 microseconds. The variation of pulse duration may be used to control heating within the liquid food product being treated. For example, long pulse lengths can be used to raise the temperature of the sample to temperatures synergistic with the electrical effect; multiple, short square wave pulses can then be rapidly delivered to complete the treatment.

Sequential electric field (and concomitant electric current) pulses may be of the same polarity, or may be of sequentially alternating polarity. It is also noted that the electric field pulse may preferably be established between electrodes having respective positive and negative polarity with respect to a ground potential, or between electrodes, one of which is maintained generally at ground potential and the other of which is pulsed at either positive or negative potential with respect to ground potential. High voltage electric pulses may also be provided, however, between electrodes, both of which are at either positive or negative potential with respect to ground potential.

Heat applied before or during electric field treatment may be used to produce microbiological kill rates in the fluid foodstuff greater than those obtainable by electric field or heat treatment alone. The elevation of heat during treatment to a temperature stressful to but not necessarily lethal to microorganisms for the time employed, is believed to exaggerate the membrane damage sustained during treatment. This may occur through an increase in membrane fluidity or porosity, producing greater damage per treatment dosage, a decrease in the capability of the damaged microorganism to effect repair during and after treatment due to the disruptive effects of such stressful temperature elevation upon cellular metabolism, and/or an increase in any osmotic effects secondary to the electric field membrane damage. By rapidly cooling the electrically treated fluid foodstuff to a refrigeration temperature, it is believed that the normal cellular mechanisms for repair or decrease of the electric field-induced cell membrane permeability are retarded, thereby increasing cell vulnerability and decreasing the reproductive capacity of remaining bacteria or spores which survive the electric field treatment.

When microorganisms are subjected to high electric fields under appropriate conditions, cell permeability is established and transcellular ion and osmotic flow may occur. This flow may be interrupted because biological membranes are exceptionally resilient and the induced transmembrane pores resealed in time for the cell to survive. A permeable cell which is not destroyed by the electric field treatment must reseal its membrane, reestablish active transport, and readjust its internal ionic and fluid content if it is to survive.

In nutritive media such as milk, natural fruit juices and natural liquid egg products, cells that are actively growing at the time of treatment may recover under appropriate conditions. However, in accordance with the present invention, effective processing may be carried out in nutritive media by temperature control. Incubation at refrigeration temperatures after treatment can reduce the metabolic level of electrically treated microorganisms and hence tend to diminish recovery and repair. Similarly, elevation of the temperature of the sample during treatment may be used to increase the kill level; in a manner similar to cooling, the heat affects cellular metabolism at temperatures greater than the growing temperature of the bacteria, even though the elevated temperature may be less than that which kills through immediate exposure.

Even though the treatment temperature is not high enough to produce significant shelf life extension by itself, elevated temperatures which stress the treated bacteria can greatly enhance the kill and shelf life extension provided by the treatment. Moreover, post-treatment incubation conditions further significantly affect the shelf life extension. Electrically treated liquid food products incubated at room temperature after treatment may begin to regenerate immediately, whereas samples incubated at refrigeration temperatures (4-9° C.) typically are inhibited. These observations are believed to relate to the degree of repair occurring during and after sample treatment.

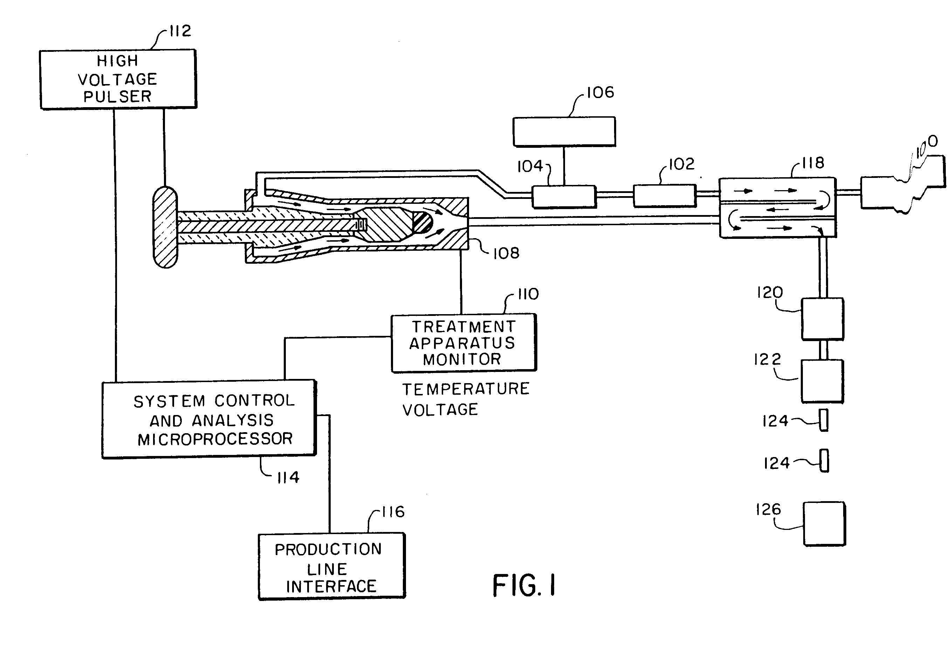

Having generally described various embodiments of the present invention, uniform electric field treatment of pumpable food products in accordance with various embodiments of the present invention will be more particularly described with respect to the processing system which is schematically illustrated in FIGURE 1. As shown in FIGURE 1, the very high electric field food processing system comprises a storage reservoir 100 for the pumpable food product to be treated, which in the illustrated embodiment is a fluid food product such as a soup, beverage, fluid dairy product or fluid egg product. The apparatus further includes an optional inline heating unit 102, a deaeration apparatus 104 having a suitable vacuum system 106 associated therewith, and a long pathway uniform electric field treatment cell 108 of very high field stability coaxial design as will be described in more detail hereinafter, in which the electric field treatment of the liquid foodstuff is carried out. The treatment cell has associated therewith a cell monitor 110 having appropriate sensor instrumentation to monitor the temperature and voltage conditions within the cell. The high voltage pulses to the cell are provided by high voltage pulser 112, which may be a high voltage lumped transmission line circuit, properly impedance matched to the treatment cell, a Blumlein transmission line circuit properly impedance matched to the treatment cell 108, a capacitive discharge circuit, in such as a discharge circuit of the type shown in FIGURE 4, or other suitable high voltage discharge apparatus for providing high voltage pulses in excess of 35,000 volts and a duration in the range of from 0.5 to 10 microseconds. The temperature and voltage information from the cell monitor 110 is provided as a data input stream to the system control and analysis microprocessor 114, which controls the operation of the high voltage pulser 112. The system control and analysis microprocessor 114 is provided with a production line interface 116 which is adapted to interface with automated production line apparatus having computer control systems. The illustrated electric field processing system further may comprise optional refrigeration apparatus 120 for cooling the treated process stream from the heat exchanger 118 to provide a refrigerated, electrical field treated foodstuff stream for aseptic packaging apparatus 122. The packaging apparatus 122 packages the treated process stream into either individual sterilized consumer packages 124 or sterilized bulk transport containers which are stored in refrigerated storage apparatus 126 until delivery to the consumer. In operation, the liquid food product to be treated, which in the illustrated embodiment may be fluid milk, a natural fruit juice such as orange juice, or a liquid natural egg product, is pumped from the storage reservoir 100 to the heat exchange unit 118 so that the heat energy is conserved within the treatment system. In this regard, the treated liquid food product which has passed through the cell 108 is conducted into heat exchange relationship with the liquid food product which is to be introduced into the treatment cell 108 by means of heat exchanger 118. After exiting the heat exchange unit 118, the fluid food product to be treated may be heated to a predetermined temperature by heating unit 102. The extent of such heating, if any, is determined by the desired processing temperature within the electric pulse processing cell 108. Because the electric cell treatment may also raise the temperature of the liquid food product, the degree of heating provided by the heating unit 102 may depend in some measure upon the efficiency of the heat exchange unit 118. Typically, the temperature of the pumpable product emerging from the heating unit 102 may be at least 40° C., and in some cases may be at least 50°C. or more.

The heated food product stream from the heating unit 102 is conducted to the deaeration unit 104. In the unit 104, the liquid may be subjected to vacuum conditions of at least 67kPa (20 inches of mercury) in order to remove dissolved gases and/or product bubbles which might adversely affect the development of a substantially uniform electric field in the treatment cell 108. It is noted that pumpable food products such as beer, soft drinks and sparkling wines which contain dissolved gases may also be processed, but would be adversely affected by vacuum deaeration. Such products may be processed at elevated pressures such as superatmospheric pressures in the treatment cell of at least 0.344 MPa (50 psia), such as a pressure in the range of from 0.69 MPa to 13.8 MPa (100 to 2000 psia), at which the gas remains in solution without forming bubbles to distort the uniformity of the high voltage electric processing field. Other foods may also be processed at super-atmospheric pressures, with or without previous vacuum deaeration.

The deaerated liquid food product is continuously passed through the long surface pathway high stability electric pulse treatment cell 108, in which it is subjected to at least one, and preferably at least 2 high voltage electric pulses at a field strength of at least about 35,000 volts per centimeter and a duration in the range of from 2 to 10 microseconds. In the illustrated embodiment, at least one of the pulses is carried out at a temperature in the range of from about 50° C. to about 70 °C. The treated liquid food product is conducted back to the heat exchange unit 118 where it is cooled by the incoming liquid food product, and is subsequently conducted to refrigeration unit 120 where it is cooled to a temperature of less than 10° C., and preferably less than 5° C. within about one minute of its pulsed electric field treatment. While in the illustrated embodiment, the refrigeration unit is used to substantially immediately cool the product in an energy efficient manner, it is noted that the product may also be cooled after it is packaged. The cooled, electrically treated liquid food product stream is subsequently introduced as an input stream to aseptic packaging apparatus 122 which packages the product in sterilized containers 124 under sterile conditions. The packaged product containers 124 are maintained under refrigeration conditions by appropriate refrigeration storage apparatus 126 until distribution to the consumer. Such storage apparatus may include refrigeration storage units at the packaging plant, refrigeration transport units in the distribution system, and refrigeration storage units at the distribution warehouse, grocery store or other consumer distribution center. Because of the extended shelf life properties provided by the electric pulse treatment, such refrigerated storage may be carried out over an extended period of time while maintaining the freshness and keeping qualities of the processed food product.

Illustrated in FIGURE 2 is an embodiment 200 of a continuous flow, long dielectric pathway electric pulse treatment cell which may be utilized as a treatment cell 108 in the apparatus off FIGURE 1.

The cell 200 is designed in a modified coaxial geometry to provide a long tracking path on the insulator surface and to assure complete treatment of the food product as it flows through the electrode region. As illustrated in FIGURE 2, which is substantially to scale, the cell 200 comprises an outer metallic electrode 202 which forms an exterior housing for the cell and which has inlet ports 204 for introducing the pumpable food product into the cell 200 for treatment, and an outlet port 206 for withdrawing the treated food product from the cell. The outer electrode 202 may be fabricated of a suitable inert food-grade sanitary metal such as stainless steel or a nonmetallic inert conductor such as polished pyrolytic carbon or h igh strength graphite, and is generally maintained at ground potential. The cell 200 further comprises an inner, high voltage electrode 208 which may be similarly fabricated from such inert metallic or non-metallic conductors, having a central body of greatest diameter which forms a product treatment area 210 with the outer electrode 202. The inner, high voltage electrode 208 has tapered surfaces 212, 214 at its respective proximal and distal ends. These tapered surfaces, located at each end of the high voltage electrode, guide the flow of liquid with minimum disruptions, reduce eddying or product flow stagnation, reduce convective or other mixing, and control the electric field to prevent breakdown. The electrode 208 is supported and electrically connected to a high voltage pulser by metallic connecting rod 216 which is completely surrounded by insulator 218, which may be of ceramic or plastic (e.g., polyethylene or polypropylene construction). A high voltage bushing 220 at the external end of the insulator 218 prevents breakdown of the air surrounding the electrodes and is used to introduce the high voltage into the cell. An insulating (plastic, ceramic, etc.) cap 222 on the end of the high voltage electrode 208 is also designed to control flow and block current from the end of the electrode. Current on the end of the electrode reduces electrode efficiency by fringing or grading into a lower field strength region and does not produce the most effective killing of bacteria.

The metallic or carbon electrodes 202, 208 may form electrodes in direct contact with the fluid food product to be treated, as shown in FIGURE 2. However, the electrodes 202, 208 may also be of ionic conductor construction such as described in U.S. Patent No. 4,695,472.

The thickness of the cell treatment zone 210 along the direction of the electric field may desirably be at least about 0.1 centimeter and will preferably be in the range of from 0.5 centimeter to 3 centimeters. The radius of the outer wall of the electrode 208 may desirably be at least 3 centimeters, and preferably will be at least 10 centimeters for high volume processing systems. The treatment unit 200 is rotationally symmetrical in shape about its longitudinal axis, and may be utilized in a parallel or series array of a plurality of such cells to form the treatment apparatus 108.

In operation, the fluid food product to be treated, such as liquid milk or natural liquid fruit juice, is introduced through input ports 204 while high voltage electric pulses which provide a field strength in the treatment zone of at least 35,000 (e.g., 35,000-45,000) volts per centimeter for a duration of less than 10 microseconds (e.g., from 2 to 5 microseconds) are repetitively applied to the metallic electrode 208 through bushing 220 at a rate coordinated with the rate of flow of the food product through the zone 210, such that all of the food product is subjected to at least one high intensity pulse in the zone 210, and preferably for a variety of food products, a plurality of at least two pulses is applied during the transit time of the most rapidly traveling component of the food product introduced through the zone 210. In this regard, arrow 224 indicates a maximum transit distance of food product in the zone 210 between pulses. The food product is at a temperature of at least 55° C (e.g., 60-75° C.) in the treatment zone 210. In this manner, all of the food product is subjected to at least one high field pulse at elevated temperature. It will also be appreciated that the flow through the cell could be reversed.

Upon exiting the treatment zone 202, the treated liquid is conducted from the zone by conduit 218, which may form the input conduit to another treatment unit 200. The length of the liquid in the treatment conduit 218 may be relatively long in comparison with the thickness of the treatment cell, in order to limit the electrical conductance between the cells. The treated food product is cooled and aseptically packaged within three minutes to a temperature of less than 9° C. It has excellent shelf life and keeping qualities.

It will be appreciated that, in the absence of cooling between cells 200, subsequent cells may operate at a higher temperature in view of the heating of the liquid food product being treated. Because the conductivity of the food product tends to increase with increasing temperature, higher currents may be provided in subsequent cells for a given pulse potential, which may beneficially enhance the shelf life of the treated product. A plurality of at least two treatment cell units 200 and preferably from about 3 to about 10 such units may be utilized to form an electric pulse treatment unit such as the treatment unit 108 of FIGURE 1, if multiple treatment is desired.

It may be desirable to degas the liquid food product issuing from a call unit prior to introduction into a subsequent call unit in the treatment apparatus. Accordingly, for example, a vacuum degassing apparatus may be provided at outlet conduit 206 for degassing of the output stream to produce a degassed, treated stream for introduction into the subsequent cell.

Another embodiment 300 of a continuous flow treatment cell for treatment of pumpable foods with electric fields is shown in FIGURE 3. The cell design is a modified coaxial treatment arrangement with a long tracking path on the insulator surface separating the two high voltage electrodes. In this regard, the cell 300 is similar to the cell 200 in that it has an outer metallic electrode 302 having inlet ports 304 and outlet port 306. An inner, high voltage electrode 308 forms a product treatment zone 310 with the inner surface of the electrode 302, and has a surface 312 curving away from the electrode 302 at the end of the treatment zone to reduce the field strength at the edge of the zone. A dielectric separator 318 having a long surface path covers a metallic electrode connecting rod 316 to prevent surface breakdown tracking. A curved bushing 320 is provided for application of high voltage pulses to the cell 300.

Having generally described methods, apparatus and processing systems, various aspects of high voltage pulsed electric field treatment of specific liquid food products utilizing a laboratory scale pulsed electric field treatment apparatus of FIGURE 4 will now be described. Illustrated in FIGURE 4 is a pulsed electric field treatment static test cell 400, which is illustrated substantially to scale, has two substantially parallel stainless steel electrodes 402, 404 which form a test chamber zone 408 with a rotationally symmetrical polyethylene separator 406. The cell 400 is rotationally symmetrical about its central axis of rotation, with the electrodes 402, 404 and dielectric separator 406 being circular in cross section perpendicular to the axis of rotation.

A liquid foodstuff to be treated may be inserted through a small hole in electrode 402 to completely fill the chamber 408. Electric pulses may be applied to the cell by means of the capacitative pulser 600 shown in FIGURE 6 which comprises a conventional high voltage power supply 602, together with a pulse forming network 604 which directs pulses to the respective electrodes of the cell 400 through the impedance load of the liquid in the cell 400 (shown in FIGURE 6 as $Z_{sample}$).

In order to determine the electric field breakdown levels for various conductive liquids and to treat such liquids, the laboratory bench-top pulser 600 and test cell 400 as shown in FIGURES 4 and 6 comprising a 2Ω, 22μs pulse forming network (PFN) and a high field test chamber was utilized. This apparatus was used to test saline solutions, apple juice, milk, filtered and unfiltered orange juice and deionized water to determine the combinations of electric field strength and pulse duration where electric breakdown of these fluids occur.

The apparatus was designed to have a variable pulse width of from 2 to 20μs with a substantially flat top at each pulse width.

A typical design load resistivity for the liquids treated was in the range of 100 to 1000Ω-cm, resulting in a 1 to 10Ω load, Z sample, in the test cell 400. The apparatus operated in air, and was designed to deliver 50 kV to a 10Ω load.

As shown in FIGURE 6, the apparatus utilizes a low impedence pulse forming network 602 chosen to have an impedance of less than 2Ω to obtain the majority of the charge voltage on the load.

Rather than remove stages of the pulse forming network to vary the pulse width, the circuit 602 uses a diverter switch circuit 606 to terminate the pulse at the desired time to provide a pulse which has the same shape (squareness) at any pulse width.

The maximum preferred pulse width is about 10 microseconds for the illustrated apparatus 400; however, a 20μs pulse forming network was chosen to further improve the degree of flatness of the output pulse in order to produce very similar output pulses at all pulse widths for meaningful comparisons from the experimental data.

For a pulse forming network with five identical 2Ω stages and a two-way transit time of 20μs.

The component values chosen for the pulse forming network 600 were 1.2μF capacitors C and a stage inductance L of 4.8 μH. This gave a pulse width of 22 μs.

The pulse forming network components consist of capacitors, inductors, buswork, switches, trigger generators, and a high voltage power supply with internal dump circuit. The capacitors C were Maxwell SS series capacitors Model 31427 which are low inductance and relatively low dissipation capacitors. The inductors L consisted of 20.3 cm (8 inch) diameter coils 7.6 cm (3 inches) long with 3 turns. Each coil used RG-218, with the outer braid removed, as the insulated wire. This reduces the hazard of electrical shock from the coils which are at high voltage when the pulse forming network is charged. The buswork was made from 0.32 cm (1/8 inch) thick aluminium plate and angles. At high field points, the buswork was wrapped with a layer of high dielectric constant material and then with a layer of semiconducting material, each made by Sigmaform. These materials grade the electric fields at the high stress points. Maxwell Model 40359 spark gaps were used as the pulse forming network output and diverter switches 608, 606. These switches are capable of 5 Coulombs at 50 to 150 kV, 350 kA maximum, and have an inductance of 100 nH. The switch has a midplane geometry with low jitter irradiated triggering. This switch is capable of handling the large coulomb transfer of the diverted or shorted pulse forming network and can operate reliably at 50 kV in air. However, to reduce the operating voltage range to 20 to 80 kV, electrode spacers were inserted to reduce the midplane-to-electrode distance to 0.64 cm (0.25 inch). The spacers were parts from another switch with lower operating voltage and the same housing.

These switches can be triggered by a 50 kV trigger generator like the Maxwell Model 40168 trigger generator. Two such trigger generators were used, a 40107 and a modified 40230. The 40107 is the predecessor of the 40168 which is essentially identical to the 40168, except that it requires a separate gas controller where the 40168 has one built in. The 40230 is identical to the 40168, except that it has a 100 kV output instead of 40 kV.

A conventional 100 kV power supply 602 was used to charge the pulse forming network 604.

The fluid breakdown test chamber 400 (FIGURE 4) was designed so that the insulators are not in the region of high electric field. Thus, only the liquid under test is subjected to the high electric field stresses. As shown in FIGURE 4, the parallel electrodes 402, 404 and the outer housings are made of stainless steel. The insulator 406 is high density polyethylene. The test chamber is sealed with O-rings (FIGURE 5). The chamber had four 1/4-NPT holes for filling and draining and two polycarbonate view ports (not shown).

The parallel electrodes 402, 404 have a spacing of 0.5 or 1.0 cm. Each electrode has a radius on the edge to minimize field enhancement. The anode area is 100 cm$^2$. An electric field plot of the test cell is shown to scale in FIGURE 5, with the scale of the axes being in inches. The electrodes are bead-blasted to condition them prior to testing. Bead-blasting the electrodes minimizes the statistical spread of the breakdown data by creating small field enhancements uniformly over the electrode surface. Diagnostic apparatus (not shown) was also utilized with the cell 400 and pulse network 600.

The diagnostics consist of a 100 kV dc high voltage monitor, a load or output voltage probe, and a load current monitor. The 100 kV dc high voltage probe is a Maxwell 1000:1 resistive probe whose total resistance is 1 GΩ. The monitor uses a Fluke DVM to display the voltage reading where 1 V on the meter equals 1000 V on the high voltage end of the probe. The output voltage was monitored with a 2.6 kΩ resistive voltage divider also made by Maxwell. A Rogowski coil was used to monitor the load current. The coil was wound on RG-2l4 coaxial cable.

A passive integrator was used to integrate the signal and the result was displayed on an oscilloscope.

Initial tests with the pulse forming network 602 were performed into a short circuit load and also into a 20Ω load. These tests provided information to verify performance of the pulse forming network.

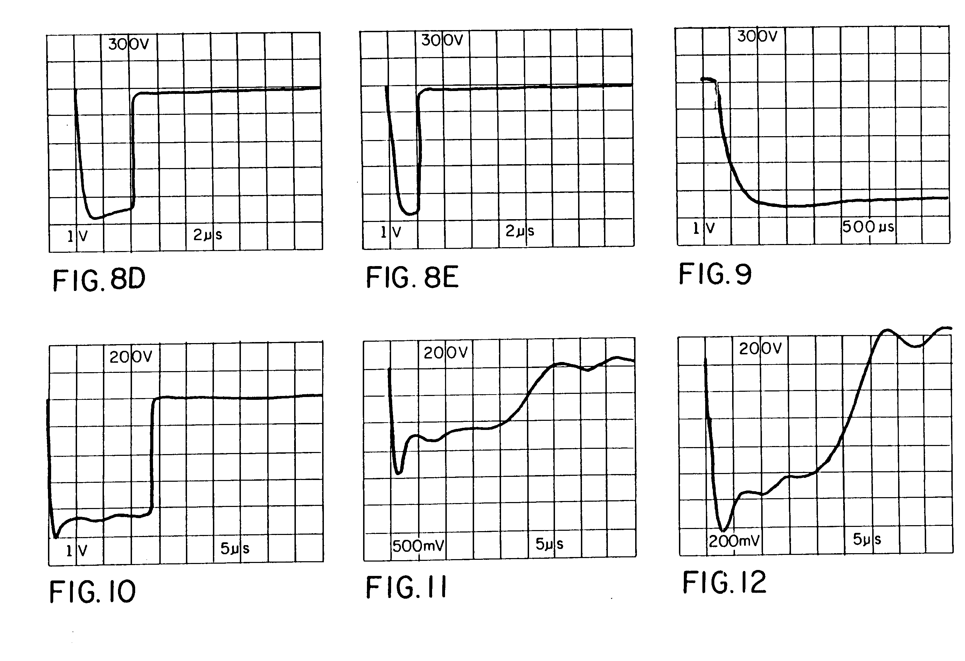

FIGURE 7 shows the current with the pulse forming network operating into a short circuit. FIGURE 8 shows the pulse forming network operating into a 200 load. FIGURE 9 shows the rise time with a 20Ω load.

Breakdown studies were performed on saline solutions, apple juice, milk, filtered and unfiltered orange juice and deionized water. Each liquid was tested with a 20μs square pulse at the maximum voltage the network 600 could be applied to the sample. The maximum voltage which can be applied to the sample under the tests is given by equation:

$$V_L = V_C \frac{Z_L}{Z_0 + Z_L}$$

where

$V_C$ = the pulse forming network charge voltage
$V_L$ = the load voltage
$Z_0$ = the pulse forming network impedance
$Z_L$ = the load impedance

Due to the low resistivity of the samples, it was not possible to reach the breakdown level of the samples during the 20μs pulse duration. The following table summarizes the measured maximum electric field strength which could be applied to each sample.

Summary of Electric Field Strength Tests

| Fluid | Average Electric Field (kV/cm) |
| --- | --- |
| 1 kΩ-cm salt solution | 86 |
| 300 Ω-cm salt solution | 52 |
| Apple juice | 42 |
| Milk | 24 |
| Orange Juice | 22 |
| Filtered Orange Juice | 28 |
| Deionized Water | 102 at 8μs |

Salt Solutions

Two salt solutions, 1 kΩ-cm and 300 Ω-cm were tested with a 20μs pulse to a maximum electric field strength of 86 kV/cm and 52 kv/cm, respectively. The electrode gap spacing was 0.5 cm, the pulse forming network was charged to the maximum voltage of 51 kV and neither sample suffered a breakdown during the 20μs pulse.

The applied voltage waveform of the 1 kΩ-cm salt solution is shown in FIGURE 10. When the pulse forming network was charged to 51 kV and diverted at 20µs, the average electric field applied to the sample was 86 kV/cm and the sample did not break down.

If the pulse forming network was not diverted, the sample would break down in the tail of the mismatched pulse forming network waveform.

The applied voltage waveform of the 300 Ω-cm solution is shown in FIGURE 11. Due to the low resistivity of the solution and the subsequent voltage division between the pulse forming network and the load, the pulse forming network could not be diverted even at the maximum charge voltage of 51 kV. This could be overcome by simply rearranging the position of the output and diverter switches; however since the sample did not break down in this worst case test, this was not necessary. The average electric field strength applied to the sample was 52 kV/cm.

Apple Juice

At 51 kV charge voltage, the average electric field strength was 42 kV/cm and the sample did not break down. The applied voltage waveform is shown in FIGURE 12.

Milk

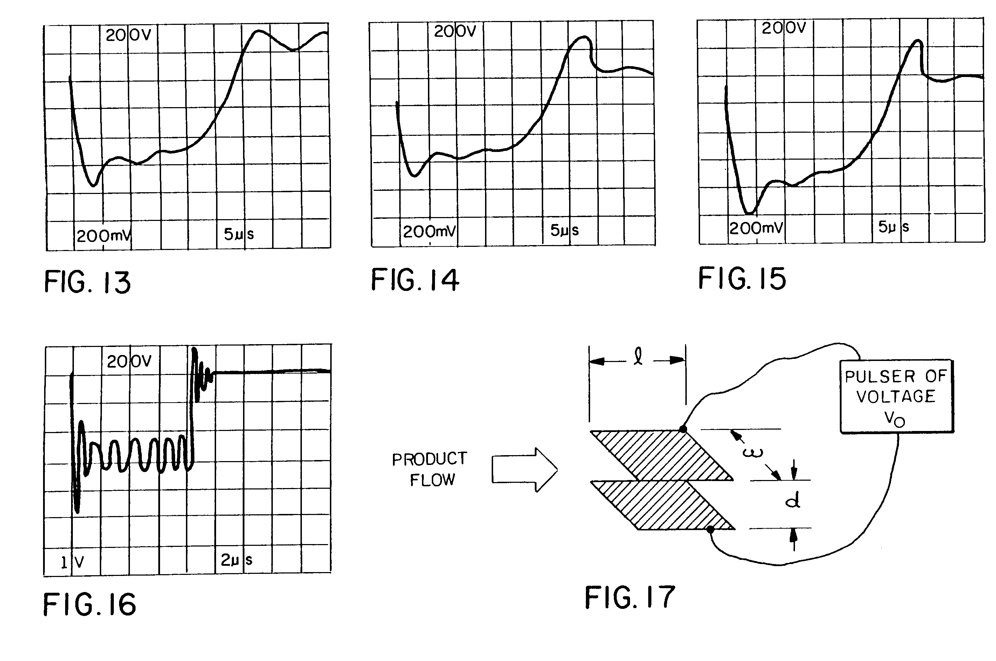

The average electric field strength applied to the sample with 51 kV charge voltage on the pulse forming network was 24 kV/cm. The milk did not break down during the 20µs pulse as shown in FIGURE 13.

Orange Juice

Fresh squeezed unfiltered orange juice was tested to a maximum electric field strength of 22 kV/cm. The sample did not break down during the 20µs square pulse; however, it did break down during the reverse voltage portion of the waveform. The particulates in the juice were on the order of the gap spacing in size. The applied voltage waveform is shown in FIGURE 14.

The orange juice was filtered using a wire mesh strainer typically found in the kitchen. This removed the large particles; however, it did allow some visible particles to get through. The applied voltage waveform of the filtered orange juice is shown in FIGURE 15. The average electric field strength was 28 kV/cm. The sample withstood the initial 20µs square pulse, but it did break down during the voltage reversal.

Deionized Water

Because deionized water has been extensively tested in the pulsed power community, it was tested as a bench mark for these tests. The water tested was bottled water which had a resistivity of 145 kΩ-cm. The deionized water was tested up to 102 kV/cm corresponding to a pulse forming network charge voltage of 51 kV. The water was tested to a maximum pulse width of 8µs. The test waveform is shown in FIGURE 16.

Summary

A 2Ω, 22µs, 50 kV, five stage, air insulated pulse forming network was designed, constructed and tested. The pulse forming network delivers pulses of variable pulse width by using a diverter rather than removing pulse forming network stages. The pulse forming network was tested to 50 kV charge voltage and found to reliably produce a square (i.e., flat-top) pulse at any pulse width up to 22µs.

The pulse forming network was used to obtain initial break down strength data of various low resistivity solutions. The solutions tested include saline, milk, apple juice, orange juice and deionized water. Due to the varying resistivity of the solutions, they were not tested to the same electric field strength. With the 2Ω pulse forming network, the break down of voltage of each solution could not be reached. This can be overcome by reconfiguring the pulse forming network to have a lower impedance and a shorter pulse width or by using the pulse forming network as a capacitor bank and diverting the bank at the desired time.

The results obtained in these tests show that much higher electric fields can be applied to conductive liquids and foods than have been previously used. Since the microbiological effects and attendant food preservation effects are believed to be a very strong function of the electric field applied to the liquid media, the results indicate that these effects may be enhanced significantly by using high electric field strength pulses above the values previously used.

From the previous description, it will be appreciated that systems may be designed to treat pumpable food products on a continuous basis. Design of such high voltage pulsed electric field systems may utilize some basic relationships to determine power requirements, pulser specifications and treatment cell design. FIGURE 17 shows a schematic diagram of a pulsed electric field system nomenclature used to describe various relationships. As shown, product is flowing between the pulsed electric field cell electrodes at a velocity $v_1$. The volume flow rate through the cell ($cm^3/s$) is then given by:

$$V_1 = v_1 \, dw.$$

If the product must be treated n times as it passes through the cell, the pulser repetition frequency must be:

$$f_r = \frac{V_1 n}{V_c},$$

where

$$V_c = dlw = \text{treatment volume}.$$

Another parameter required for pulser design is the cell resistance, which is given by:

$$R_c = \frac{\rho \, d}{w \, l},$$

where

$$\rho = \text{product resistivity}.$$

The pulsed electric field in the cell is:

$$E_p = \frac{V_0}{d}$$

where $V_0$ is the voltage on the cell. The current is:

$$I_c = \frac{V_0}{R_c} = \frac{E_p \, w \, 1}{\rho}$$

Using this, the peak power becomes:

$$P_c = I_c \, V_0 = \frac{V_c \, E_p^2}{\rho}$$

If a pulse width of $\tau_p$ is used, then the average power becomes:

$$P_{AVG} = \frac{\tau \, E_p^2 \, V_c \, n}{\rho}$$

The temperature rise is given by:

$$\Delta T = \frac{E^2 \, \tau \, C_P}{\rho}$$

where $C_p$ = heat capacity of thee pumpable food product being treated.

For example, for a pulser designed to treat 10 liters per hour, based on impedance and voltage parameters as described hereinbelow, having cell volume of about 25 $cm^3$ will provide approximately 9 pulses of high voltage treatment per volume as it moves through the cell.

If the flow rate is increased to slightly less than 25 cm$^3$/s (90 l/hr) the pulser will provide approximately one treatment per pulse per cell volume.

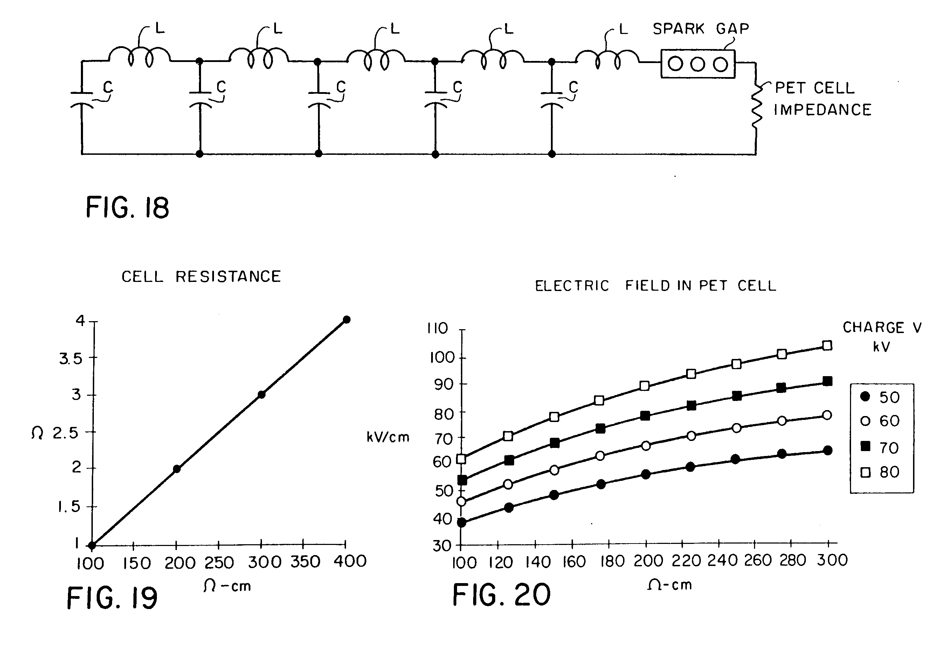

A treatment cell, which may be a cell such as that shown in FIGURE 2 or 3, may be driven by a pulse-forming network charged to some initial voltage (e.g., 50 Kv) by a conventional high voltage power source and discharged into the pulsed electric field cell. A schematic electrical diagram of a pulse forming network configuration which maybe utilized is shown in FIGURE 18.

The pulse forming network impedance should be matched to the impedance of the pulsed electric field cell to provide the highest energy transfer to the cell. The pulse forming network is 1.67Ωs and has a 20μs pulse width. The cell itself will have an impedance ranging from about 1 to 4Ω as shown in FIGURE 19, depending on the resistivity of the food product used, assuming the resistivity of the food product in the range of 100 to 400Ω-cm. For a cell with 0.5 cm electrode spacing and a cell volume of 25 cm$^3$, the pulse forming network will produce a peak electric field that depends on resistivity and charge voltage as shown in FIGURE 20.

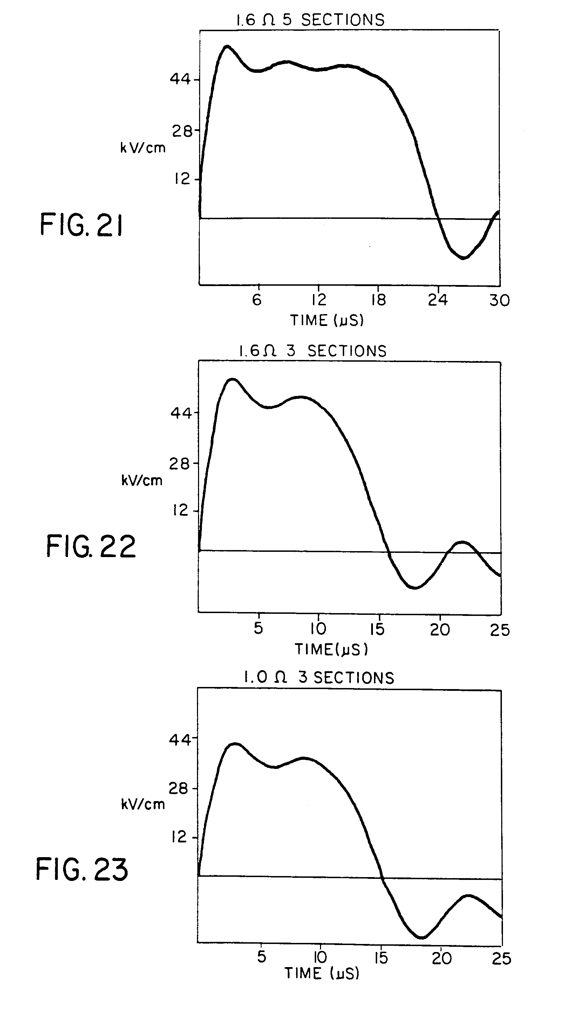

The duration of the pulse produced by the pulse forming network may be varied by disconnecting sections of the pulse forming network. The illustrated pulser will be capable of producing fields as high as 90 kV/cm with a matched load. Higher levels may be achieved with higher resistivity food products. FIGURE 21 shows the calculated electric field waveform with a 1.0Ω load on the cell and 20μs pulse width. FIGURE 22 shows the calculated pulse shape with a 3-section pulse forming network and 1.6Ω load. FIGURE 23 shows the calculated waveform for a 3-section pulse forming network and 1.0Ω load.

Food products change resistivity as a function of temperature. For example, over a temperature range of 15 to 60 degrees C., the resistivity of milk drops by a factor of about 2. The following table shows calculated temperature rises for products with various resistivities.

| Temperature Rise in Pulsed Electric Treatment Cell* | | |
|---|---|---|
| Resistivity Ω-cm | Electric Field kV/cm | Temperature Degrees C. |
| 100 | 38 | 34 |
| 200 | 54 | 35 |
| 300 | 65 | 33 |
| 400 | 71 | 30 |

\* assumes $C_p$ = 1.0, t = 10μs, and pulse forming network charge voltage 50 kV

Thus, if a typical pulse is applied to 2 percent fat homogenized milk that is initially at room temperature, the resistivity will drop from about 200 to 140 Ω-cm. This means that the electric field will also drop during the pulse. For this case, the drop would be about 15 percent.

Accordingly, it may be desirable to design a pulse forming network to correct for the drop in voltage during the pulse to optimize the pulse forming network for a particular product.

With the pulser running at 1 Hz and 50 kV charge voltage, the average power is 7.5 kW and at 80 kV, the power is 19.2 kW.

A pulsed electric field cell design suitable for continuous flow processing is shown in FIGURE 3 as previously described. The illustrated cell has an active volume of 24 cm$^3$ and an electrode gap of 0.5 cm. For 100 Ω-cm product, the cell design impedance is designed to be approximately 1Ω

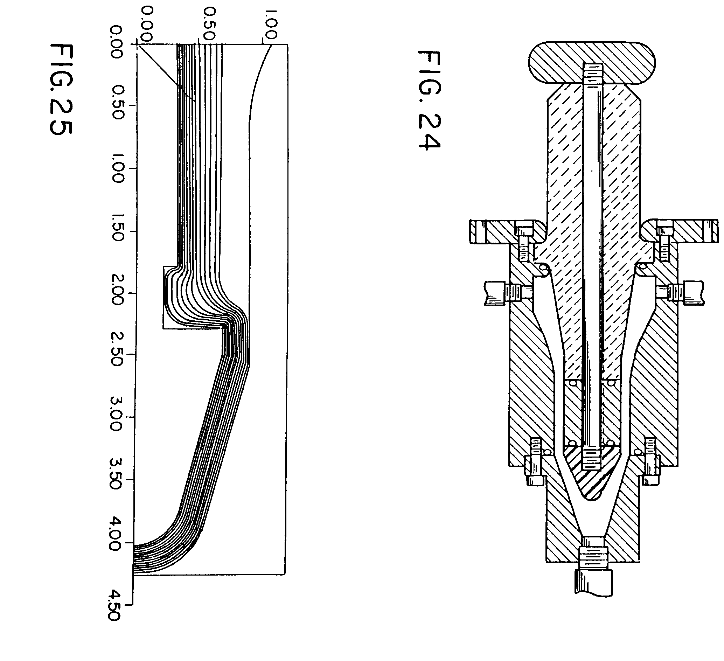

FIGURE 24 shows the cell of FIGURE 3 in configuration for flow testing. Product is designed to enter the cell at the bottom and flow upward past the coaxial electrodes. The flow is upward to minimize thermal mixing since the hot liquid will always be on the upper exist side of the cell. This cell design is intended to be useful for flow rates up to 100 1/hr, and possibly higher.

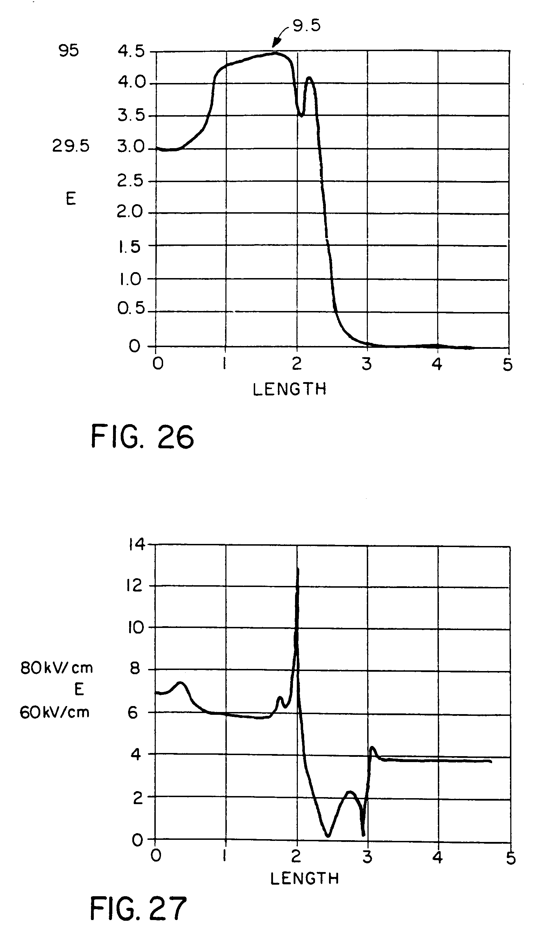

FIGURE 25 shows an equipotential plot made to determine the uniformity of the electric field produced by the cell. FIGURES 26 and 27 are plots of the electric field along the surface of the electrodes.

Accordingly, it will be appreciated that improved methods and apparatus for the preservation of fluid foodstuffs such as dairy products, fruit juices and liquid egg products have been provided in accordance with the present disclosure.

**Claims**

1.  A pulsed electric field treatment apparatus for preservation of a pumpable foodstuff comprising an electric field treatment cell (200, 300) comprising a first electrode means (202, 302) for making electric contact with pumpable foodstuff disposed adjacent said first electrode means (202, 302) in said treatment cell (200, 300) and a second electrode means (208, 308) spaced apart from said first electrode means (202,302) and for making electric contact with pumpable foodstuff disposed in said treatment cell (200, 300) between said first electrode means (202, 302) and said second electrode means (200, 308), solid dielectric separator means (218, 318) separating the first (202, 302) and second (208, 308) electrode means; inlet conduit means (204, 304) for introducing a pumpable foodstuff to be treated into said electric field treatment cell (200, 300) and outlet conduit means (206, 306) for discharging food product which has passed through said treatment cell (200, 300); means (112, 600) for applying high voltage electric pulses to said first (202, 302) and second (208, 308) electrode means at a predetermined rate to provide an electric field between said electrode means (202, 302, 208, 308) through a pumpable foodstuff located therebetween in said treatment cell (200, 300) of at least 20,000 volts per centimetre or more; and means for pumping a pumpable foodstuff through said inlet conduit means (204, 304) at a rate such that all of said pumpable foodstuff is subjected to at least one pulse in transit through said treatment cell (200, 300) before it is conducted from the treatment cell (200, 300) through said outlet conduit means (206, 306) characterized in that said dielectric separator means (218, 318) is arranged to secure said second electrode means (208, 308) within and spaced apart from said first electrode means (202, 302), said treatment cell (200, 300) including a substantially uniform electric field treatment zone (210, 310), in which said first (202, 302) and said second (208, 308) electrode means are spaced apart by a substantially uniform distance.

2.  Pulsed electric field treatment apparatus as claimed in Claim 1 wherein at least one of said first electrode means (202, 302) and said second electrode means (208, 308) includes an electro-chemically inert conductor for making electrical contact with said pumpable foodstuff.

3.  Pulsed electric field treatment apparatus as claimed in Claim 1 wherein at least one of said first electrode means (202, 302) and said second electrode means (208, 308) includes a non-metallic inert conductor for making electrical contact with said pumpable foodstuff.

4.  Pulsed electric field treatment apparatus in accordance with Claim 3 wherein said non-metallic inert conductor comprises inert carbon.

5.  Pulsed electric field treatment apparatus in accordance with Claim 3 wherein said non-metallic inert conductor comprises graphite.

6.  Pulsed electric field treatment apparatus as claimed in any preceding claim wherein said first electrode means (202, 302) has a hollow elongated aperture formed therein and said dielectric separator means (218, 318) is arranged to secure said second electrode means (208, 308) within and spaced apart from said first electrode means (202, 302).

7.  Pulsed electric field treatment apparatus as claimed in Claim 6 wherein said hollow elongated aperture is formed to have a substantially circular transverse cross-section.

8.  Pulsed electric field treatment apparatus as claimed in Claim 7 wherein said second electrode means (208, 308) is generally elongated, has a substantially circular transverse cross-section and is coaxially disposed within the aperture of said first electrode means (202, 302) such that an elongate annular treatment zone (210, 310) is defined between said first (202, 302) and said second (208, 308) electrode means.

9.  Pulsed electric field treatment apparatus as claimed in any preceding claim wherein the surface of said second electrode means (208, 308)) at one end (212, 312) of said treatment zone (210, 310) tapers or curves away from the opposed surface of said first electrode means (202, 302), such that the spacing between said first (202, 302) and said second electrode means (208, 308) at said end (212, 312) of said treatment zone (210, 310) is greater than the distance between said first (202, 302) and said second electrode means (208, 308) in said treatment zone (210, 310), thereby to reduce the electric field strength between said first and second electrode means (203, 302, 208, 308) at said end (212, 312).

10. Pulsed electric field treatment apparatus as claimed in any preceding claim wherein said means (112, 600) for applying high voltage electrical pulses comprises means (606, 608) for generating such pulses having a duration in the range of 0.01 to 10 microseconds per pulse.

11. Pulsed electric field treatment apparatus as claimed in any preceding claim wherein said means (112, 600) for applying high voltage electrical pulses comprises means for reversing the polarity of voltage applied between said first (202, 302) and second (208, 308) electrode means.

12. Pulsed electric field treatment apparatus as claimed in any preceding claim wherein said means (112, 600) for applying high voltage electrical pulses is capable of providing an electric field between said electrode means (202, 302, 208, 308) through said pumpable foodstuff located therebetween in said treatment zone (210, 310) of at least 25,000 volts per centimetre.

13. Pulsed electric field treatment apparatus as claimed in any preceding claim further comprising means (102, 118) for heating the pumpable foodstuff to a predetermined temperature of at least about 45°C before introduction to said electric field treatment cell (200, 300), and means for cooling (118, 120) the pumpable foodstuff which has passed through said one or more treatment zones (210, 310) to a refrigeration temperature in the range of from about 0°C to about 10°C.

14. Pulsed electric field treatment apparatus as claimed in any preceding claim including means for pressurizing said pumpable foodstuff in said electric field treatment cell (200, 300) to prevent the formation of gas bubbles therein.

15. Pulsed electric field treatment apparatus as claimed in Claim 14 wherein said means for pressurizing said pumpable foodstuff pressurizes said pumpable foodstuff up to a pressure of 13.8MPa.

16. Pulsed electric field treatment apparatus as claimed in any preceding claim wherein said second electrode means (208, 308) is connected to said means (112, 600) for applying high voltage pulses by a conductive rod (216, 316) through said dielectric separator means (218, 318) and the surface (212, 312) of said second electrode means (208, 308) near the end of said treatment zone (210, 310) adjacent said conductive rod (216, 316) tapers or curves away from the opposed surface of said first electrode means (202, 302), to prevent electric field breakdown between said first (202, 302) and said second (208, 308) electrode means.

17. Pulsed electric field treatment apparatus as claimed in any preceding claim, wherein the surface of said second electrode means adjacent the other end (214) of said treatment zone (210) proximate said outlet conduit means tapers away from the opposed surface of said first electrode means (202), such that the spacing between the electrode means (202, 308) at said other end (214) is greater than the distance between said first and second electrode means (202, 208) within said treatment zone (210), thereby to reduce the electric field strength between said first and second electrode means (202, 208) at said other end (214).

18. Pulsed electric field treatment apparatus as claimed in Claim 1, wherein the interface between said second electrode means (208, 308), said dielectric separator means (218, 318) and said pumpable foodstuff is removed from the region of high electric field between said first and second electrode means (202, 302, 208, 308) in said substantially uniform electric field treatment zone (210, 310).

19. Pulsed electric field treatment apparatus as claimed in Claim 16, wherein the interface between said second electrode means (208, 308), said dielectric separator means (218, 318) and said pumpable foodstuff is removed from the region of high electric field between said first and second electrode means (202, 302, 208, 308) in said substantially uniform electric field treatment zone (210, 310) and is located at said tapered or curved surface of said second electrode means (208, 308) near said end adjacent said conductive rod (216, 316) such that the spacing between said interface and said first electrode means (202, 302) at said interface is greater than the distance between said first and second electrode means (202, 302, 208, 308) in said treatment zone (210, 310).

20. Pulsed electric field apparatus as claimed in Claim 1, wherein said dielectric separator means (218, 318) has a minimum surface pathway length along the pathway between the surfaces, within said treatment cell (200, 300), of said first (202, 302) and second (208, 308) electrode means of at least twice the distance between said first and second electrode means (202, 302, 208, 308) in said treatment zone (210, 310).

**Patentansprüche**

1. Einrichtung für eine gepulste Elektrofeldbehandlung zum Haltbarmachen eines pumpbaren Lebensmittels, umfassend:

   eine Elektrofeldbehandlungszelle (200, 300) mit einem ersten Elektrodenmittel (202, 302) zum Herstellen eines elektrischen Kontakts mit in der Behandlungszelle (200, 300) benachbart dem ersten Elektrodenmittel (202, 302) angeordnetem pumpbaren Lebensmittel und mit einem von dem ersten Elektrodenmittel (202, 302) im Abstand angeordneten zweiten Elektrodenmittel (208, 308) zum Herstellen eines elektrischen Kontakts mit in der Behandlungszelle (200, 300) zwischen dem ersten Elektrodenmittel (202, 302) und dem zweiten Elektrodenmittel (208, 308) angeordnetem pumpbaren Lebensmittel und mit einem festen dielektrischen Trennmittel (218, 318), das das erste (202, 302) und das zweite (208, 308) Elektrodenmittel trennt;
   ein Einlaßleitungsmittel (204, 304) zum Einführen eines in der Elektrofeldbehandlungszelle (200, 300) zu behandelnden pumpbaren Lebensmittels und ein Auslaßleitungsmittel (206, 306) zum Abgeben eines Lebensmittelerzeugnisses, das durch die Behandlungszelle (200, 300) hindurchgegangen ist;
   ein Mittel (112, 600) zum Anlegen von Hochspannungselektropulsen an dem ersten (202, 302) und dem zweiten (208, 308) Elektrodenmittel mit einer vorbestimmten Rate, um ein elektrisches Feld von wenigstens 20.000 Volt pro Zentimeter oder mehr zwischen den Elektrodenmitteln (202, 302, 208, 308) durch ein dazwischen in der Behandlungszelle (200, 300) angeordnetes pumpbares Lebensmittel vorzusehen; und
   ein Mittel zum Pumpen eines pumpbaren Lebensmittels durch das Einlaßleitungsmittel (204, 304) mit einer Rate derart, daß das gesamte pumpbare Lebensmittel beim Durchgang durch die Behandlungszelle (200, 300) wenigstens einem Puls ausgesetzt wird, bevor es durch das Auslaßleitungsmittel (206, 306) aus der Behandlungszelle (200, 300) geleitet wird,
   **dadurch gekennzeichnet,**
   daß das dielektrische Trennmittel (218, 318) derart angeordnet ist, daß es das zweite Elektrodenmittel (208, 308) innerhalb und im Abstand von dem ersten Elektrodenmittel (202, 302) sichert, wobei die Behandlungszelle (200, 300) eine im wesentlichen gleichmäßige Elektrofeldbehandlungszone (210, 310) umfaßt, in der das erste (202, 302) und das zweite (208, 308) Elektrodenmittel in einem im wesentlichen gleichmäßigen Abstand voneinander angeordnet sind.

2. Einrichtung für eine gepulste Elektrofeldbehandlung nach Anspruch 1, bei der wenigstens eines des ersten Elektrodenmittels (202, 302) und des zweiten Elektrodenmittels (208, 308) einen elektrochemisch inerten Leiter umfaßt zum Herstellen eines elektrischen Kontaktes mit dem pumpbaren Lebensmittel.

3. Einrichtung für eine gepulste Elektrofeldbehandlung nach Anspruch 1, bei der wenigstens eines des ersten Elektrodenmittels (202, 302) und des zweiten Elektrodenmittels (208, 308) einen nichtmetallischen inerten Leiter umfaßt zum Herstellen eines elektrischen Kontaktes mit dem pumpbaren Lebensmittel.

4. Einrichtung für eine gepulste Elektrofeldbehandlung nach Anspruch 3, bei der der nichtmetallische inerte Leiter inerten Kohlenstoff umfaßt.

5. Einrichtung für eine gepulste Elektrofeldbehandlung nach Anspruch 3, bei der der nichtmetallische inerte Leiter Graphit umfaßt.

6. Einrichtung für eine gepulste Elektrofeldbehandlung nach einem der vorangehenden Ansprüche, bei der das erste Elektrodenmittel (202, 302) eine darin ausgebildete hohle längliche Öffnung aufweist und das dielektrische Trennmittel (218, 318) dazu angeordnet ist, das zweite Elektrodenmittel (208, 308) innerhalb und im Abstand von dem ersten Elektrodenmittel (202, 302) zu sichern.

7. Einrichtung für eine gepulste Elektrofeldbehandlung nach Anspruch 6, bei der die hohle längliche Öffnung derart ausgebildet ist, daß sie einen im wesentlichen kreisförmigen Querschnitt aufweist.

8. Einrichtung für eine gepulste Elektrofeldbehandlung nach Anspruch 7, bei der das zweite Elektrodenmittel (208, 308) im allgemeinen länglich ist, einen im wesentlichen kreisförmigen Querschnitt aufweist und innerhalb der Öffnung des ersten Elektrodenmittels (202, 302) derart koaxial angeordnet ist, daß eine längliche ringförmige Behandlungszone (210, 310) zwischen dem ersten (202, 302) und dem zweiten (208, 308) Elektrodenmittel definiert ist.

EP 0 594 566 B1

9. Einrichtung für eine gepulste Elektrofeldbehandlung nach einem der vorangehenden Ansprüche, bei der die Oberfläche des zweiten Elektrodenmittels (208, 308) sich an einem Ende (212, 312) der Behandlungszone (210, 310) verjüngt oder von der gegenüberliegenden Oberfläche des ersten Elektrodenmittels (202, 302) weg krümmt, derart, daß der Abstand zwischen dem ersten (202, 302) und dem zweiten Elektrodenmittel (208, 308) an diesem Ende (212, 312) der Behandlungszone (210, 310) größer ist als der Abstand zwischen dem ersten (202, 302) und dem zweiten Elektrodenmittel (208, 308) in der Behandlungszone (210, 310), um hierdurch die elektrische Feldstärke zwischen dem ersten und dem zweiten Elektrodenmittel (202, 302, 208, 308) an dem Ende (212, 312) zu verringern.

10. Einrichtung für eine gepulste Elektrofeldbehandlung nach einem der vorangehenden Ansprüche, bei der das Mittel (112, 600) zum Anlegen von Hochspannungselektropulsen ein Mittel (606, 608) zum Erzeugen derartiger Pulse mit einer Dauer im Bereich von 0,01 bis 10 Mikrosekunden pro Puls aufweist.

11. Einrichtung für eine gepulste Elektrofeldbehandlung nach einem der vorangehenden Ansprüche, bei der das Mittel (112, 600) zum Anlegen von Hochspannungselektropulsen ein Mittel zum Umkehren der Polarität der zwischen dem ersten (202, 302) und zweiten (208, 308) Elektrodenmittel angelegten Spannung umfaßt.

12. Einrichtung für eine gepulste Elektrofeldbehandlung nach einem der vorangehenden Ansprüche, bei der das Mittel (112, 600) zum Anlegen von Hochspannungselektropulsen geeignet ist, ein elektrisches Feld von wenigstens 25.000 Volt pro Zentimeter zwischen den Elektromitteln (202, 302, 208, 308) durch das in der Behandlungszone (210, 310) dazwischen angeordnete pumpbare Lebensmittel vorzusehen.

13. Einrichtung für eine gepulste Elektrofeldbehandlung nach einem der vorangehenden Ansprüche, ferner umfassend ein Mittel (102, 118) zum Erhitzen des pumpbaren Lebensmittels auf eine vorbestimmte Temperatur von wenigstens etwa 45°C vor dem Einführen in die Elektrofeldbehandlungszelle (200, 300) und ein Mittel zum Kühlen (118, 120) des pumpbaren Lebensmittels, das durch eine oder mehrere Behandlungszonen (210, 310) hindurchgegangen ist, auf eine Kühltemperatur im Bereich von etwa 0°C bis etwa 10°C.

14. Einrichtung für eine gepulste Elektrofeldbehandlung nach einem der vorangehenden Ansprüche, umfassend ein Mittel zum Unterdrucksetzen des pumpbaren Lebensmittels in der Elektrofeldbehandlungszelle (200, 300), um die Bildung von Gasbläschen darin zu verhindern.

15. Einrichtung für eine gepulste Elektrofeldbehandlung nach Anspruch 14, bei der das Mittel zum Unterdrucksetzen des pumpbaren Lebensmittels das pumpbare Lebensmittel bis zu einem Druck von 13,8 MPa unter Druck setzt.

16. Einrichtung für eine gepulste Elektrofeldbehandlung nach einem der vorangehenden Ansprüche, bei der das zweite Elektrodenmittel (208, 308) mit dem Mittel (112, 600) zum Anlegen von Hochspannungspulsen durch eine leitfähige Stange (216, 316) durch das dielektrische Trennmittel (218, 318) verbunden ist und die Oberfläche (212, 312) des zweiten Elektrodenmittels (208, 308) nahe dem Ende der Behandlungszone (210, 310) benachbart der leitfähigen Stange (216, 316) sich verjüngt oder sich von der gegenüberliegenden Oberfläche des ersten Elektrodenmittels (202, 302) weg krümmt, um einen Zusammenbruch des elektrischen Feldes zwischen dem ersten (202, 302) und dem zweiten (208, 308) Elektrodenmittel zu verhindern.

17. Einrichtung für eine gepulste Elektrofeldbehandlung nach einem der vorangehenden Ansprüche, bei der die Oberfläche des zweiten Elektrodenmittels benachbart dem anderen Ende (214) der Behandlungszone (210) nahe dem Auslaßleitungsmittel sich von der gegenüberliegenden Oberfläche des ersten Elektrodenmittels (202) weg verjüngt, derart, daß der Abstand zwischen den Elektrodenmitteln (202, 208) an dem anderen Ende (214) größer als die Entfernung zwischen dem ersten und dem zweiten Elektrodenmittel (202, 208) innerhalb der Behandlungszone (210) ist, um hierdurch die elektrische Feldstärke zwischen dem ersten und dem zweiten Elektrodenmittel (202, 208) am anderen Ende (214) zu verringern.

18. Einrichtung für eine gepulste Elektrofeldbehandlung nach Anspruch 1, bei der die Grenze zwischen dem zweiten Elektrodenmittel (208. 308), dem dielektrischen Trennmittel (218. 318) und dem pumpbaren Lebensmittel von dem Bereich hohen elektrischen Feldes zwischen dem ersten und dem zweiten Elektrodenmittel (202, 302, 208, 308) in der im wesentlichen gleichmäßigen Elektrofeldbehandlungszone (210, 310) verlegt ist.

19. Einrichtung für eine gepulste Elektrofeldbehandlung nach Anspruch 16, bei der die Grenze zwischen dem zweiten Elektrodenmittel (208, 308), dem dielektrischen Trennmittel (218, 318) und dem pumpbaren Lebensmittel aus dem Bereich hohen elektrischen Feldes zwischen dem ersten und dem zweiten Elektrodenmittel (202, 302, 208, 308) in der im wesentlichen gleichmäßigen Elektrofeldbehandlungszone (210, 310) verlegt ist und an der sich verjüngenden oder gekrümmten Oberfläche des zweiten Elektrodenmittels (208, 308) nahe dem der leitfähigen Stange (216, 316) benachbarten Ende angeordnet ist, derart, daß der Abstand zwischen der Grenze und dem ersten Elektrodenmittel (202, 302) an der Grenze größer als die Entfernung zwischen dem ersten und dem zweiten Elektrodenmittel (202. 302, 208, 308) in der Behandlungszone (210, 310) ist.

20. Einrichtung für eine gepulste Elektrofeldbehandlung nach Anspruch 1, bei der das dielektrische Trennmittel (218, 318) eine minimale Oberflächenpfadlänge längs des Pfades zwischen den Oberflächen innerhalb der Behandlungszelle (200, 300) des ersten (202, 302) und zweiten (208, 308) Elektrodenmittels von wenigstens dem Doppelten der Entfernung zwischen dem ersten und dem zweiten Elektrodenmittel (202, 302, 208, 308) in der Behandlungszone (210, 310) aufweist.

## Revendications

1. Dispositif de traitement à champ électrique pulsé pour la conservation d'un produit alimentaire pouvant être pompé, comprenant une cellule de traitement par champ électrique (200, 300) comprenant un premier moyen formant électrode (202, 302) pour établir un contact électrique avec le produit alimentaire pompable disposé adjacent audit premier moyen électrode (202, 302) dans ladite cellule de traitement (200, 300) et un second moyen électrode (208, 308) espacé dudit premier moyen électrode (202, 302) et pour établir un contact électrique avec le produit alimentaire pompable disposé dans ladite cellule de traitement (200, 300) entre ledit premier moyen électrode (202, 302) et ledit second moyen électrode (208, 308), un moyen séparateur diélectrique solide (218, 318) séparant le premier (202, 302) et le second (208, 308) moyens électrodes ; un moyen conduit d'admission (204, 304) pour introduire un produit alimentaire pompable à traiter dans ladite cellule de traitement par champ électrique (200, 300) et un moyen conduit de sortie (206, 306) pour décharger le produit alimentaire ayant traversé ladite cellule de traitement (200, 300); un moyen (112, 600) pour appliquer des impulsions électriques à haute tension auxdits premier (202, 302) et second (208, 308) moyens électrodes à un taux prédéterminé pour établir un champ électrique entre lesdits moyens électrodes (202, 302, 208, 308) à travers un produit alimentaire pompable interposé dans ladite cellule de traitement (200, 300) d'au moins 20 000 V par centimètre ou plus; et un moyen pour pomper un produit alimentaire pompable à travers ledit moyen conduit d'admission (204, 304) à une vitesse telle que la totalité dudit produit alimentaire pompable est soumise à au moins une impulsion traversant ladite cellule de traitement (200, 300) avant d'être évacué de la cellule de traitement (200, 300) à travers ledit moyen conduit de sortie (206, 306),
caractérisé en ce que ledit moyen séparateur diélectrique (218, 318) est prévu pour immobiliser ledit second moyen électrode (208, 308) dans et à l'écart dudit premier moyen électrode (202, 302), ladite cellule de traitement (200, 300) comprenant une zone de traitement par champ électrique sensiblement uniforme (210, 310) dans laquelle ledit premier (202, 302) et ledit second (208, 308) moyens électrodes sont espaces d'une distance sensiblement uniforme.

2. Dispositif de traitement à champ électrique pulsé selon la revendication 1, dans lequel au moins un moyen parmi ledit premier moyen électrode (202, 302) et ledit second moyen électrode (208, 308) comprend un conducteur électrochimiquement inerte, pour établir un contact électrique avec ledit produit alimentaire pompable.

3. Dispositif de traitement à champ électrique pulsé selon la revendication 1, dans lequel au moins un moyen parmi ledit premier moyen électrode (202, 302) et ledit second moyen électrode (208, 308) comprend un conducteur inerte non métallique pour établir un contact électrique avec ledit produit alimentaire pompable.

4. Dispositif de traitement à champ électrique pulsé selon la revendication 3, dans lequel ledit conducteur inerte non métallique comprend du carbone inerte.

5. Dispositif de traitement à champ électrique pulsé selon la revendication 3, dans lequel ledit conducteur inerte non métallique comprend du graphite.

6. Dispositif de traitement à champ électrique pulsé selon l'une quelconque des revendications précédentes, dans lequel ledit premier moyen électrode (202, 302) possède une ouverture creuse allongée, formée à son intérieur, et ledit moyen séparateur diélectrique (218, 318) est prévu pour immobiliser ledit second moyen électrode (208, 308) dans et à l'écart dudit premier moyen électrode (202, 302).

7. Dispositif de traitement à champ électrique pulsé selon la revendication 6, dans lequel ladite ouverture creuse allongée est formée pour présenter une section transversale sensiblement circulaire.

8. Dispositif de traitement à champ électrique pulsé selon la revendication 7, dans lequel ledit second moyen électrode (208, 308) est globalement allongé, possède une section transversale sensiblement circulaire et est placé, de façon coaxiale, dans l'ouverture dudit premier moyen électrode (202, 302) de telle façon qu'une zone de traitement allongée et annulaire (210, 310) soit définie entre ledit premier (202, 302) et ledit second (208, 308) moyens électrodes.

9. Dispositif de traitement à champ électrique pulsé selon l'une quelconque des revendications précédentes, dans lequel la surface dudit second moyen électrode (208, 308) à une extrémité (212, 312) de ladite zone de traitement (210, 310) est conique ou est incurvée à l'écart de la surface opposée dudit premier moyen électrode (202, 302) de telle façon que l'espacement entre ledit premier (202, 302) et ledit second (208, 308) moyens électrodes à ladite extrémité (212, 312) de ladite zone de traitement (210, 310) soit supérieur à la distance séparant ledit premier (202, 302) et ledit second (208, 308) moyens électrodes dans ladite zone de traitement (210, 310, réduisant ainsi l'intensité du champ électrique entre lesdits premier et second moyens électrodes (202, 302, 208, 308) à ladite extrémité (212, 312).

10. Dispositif de traitement à champ électrique pulsé selon l'une quelconque des revendications précédentes, dans lequel ledit moyen (112, 600) pour appliquer des impulsions électriques à haute tension comprend un moyen (606, 608) pour générer de telles impulsions présentant une durée comprise entre 0,01 et 10 microsecondes par impulsion.

11. Dispositif de traitement à champ électrique pulsé selon l'une quelconque des revendications précédentes, dans lequel ledit moyen (112, 600) pour appliquer des impulsions électriques à haute tension comprend un moyen pour inverser la polarité de la tension appliquée entre lesdits premier (202, 302) et second (208, 308) moyens électrodes.

12. Dispositif de traitement à champ électrique pulsé selon l'une quelconque des revendications précédentes, dans lequel ledit moyen (112, 600) pour appliquer des impulsions électriques à haute tension est capable de produire un champ électrique entre lesdits moyens électrodes (202, 302, 208, 308) à travers ledit produit alimentaire pompable interposé dans ladite zone de traitement (210, 310) d'au moins 25 000 V par centimètre.

13. Dispositif de traitement à champ électrique pulsé selon l'une quelconque des revendications précédentes, comprenant, de plus, un moyen (102, 118) pour chauffer le produit alimentaire pompable à une température prédéterminée d'au moins environ 45°C avant l'introduction dans ladite cellule de traitement par champ électrique (200, 300), et un moyen pour refroidir (118, 120) le produit alimentaire pompable ayant traversé ladite une ou lesdites plusieurs zones de traitement (210, 310) à une température de réfrigération comprise entre environ 0°C et environ 10°C.

14. Dispositif de traitement à champ électrique pulsé selon l'une quelconque des revendications précédentes, comprenant un moyen pour mettre sous pression ledit produit alimentaire pompable dans ladite cellule de traitement par champ électrique (200, 300) afin d'y empêcher la formation de bulles de gaz.

15. Dispositif de traitement à champ électrique pulsé selon la revendication 14, dans lequel ledit moyen pour mettre sous pression ledit produit alimentaire pompable met ledit produit alimentaire pompable sous une pression allant jusqu'à 13,8 MPa.

16. Dispositif de traitement à champ électrique pulsé selon l'une quelconque des revendication, précédentes, dans lequel ledit second moyen électrode (208 308) est connecté audit moyen (112, 600) pour appliquer des impulsions à haute tension à l'aide d'une tige conductrice (216, 316) à travers ledit moyen séparateur diélectrique (218, 316), et la surface (212, 312) dudit second moyen électrode (208, 308) près de l'extrémité de ladite zone de traitement (210, 310) adjacente à ladite tige conductrice (216, 316) est effilée ou est incurvée en s'écartant de la surface opposée dudit premier moyen électrode (202, 302; afin d'empêcher une rupture du champ électrique entre ledit premier (202, 302) et ledit second (208, 308) moyens électrodes.

17. Dispositif de traitement à champ électrique pulsé selon l'une quelconque des revendications précédentes, dans lequel la surface dudit second moyen électrode adjacente à l'autre extrémité (214) de ladite zone de traitement (210) proche dudit moyen conduit de sortie s'évase en s'écartant de la surface opposée dudit premier moyen électrode (202) de telle façon que l'espacement entre les moyens électrodes, (202, 308) à ladite autre extrémité (214) soit supérieur à la distance séparant lesdits premier et second moyens électrodes (202, 208) dans ladite zone de traitement (210) afin de réduire ainsi l'intensité du champ électrique entre lesdits premier et second moyens électrodes (202, 208) sur ladite autre extrémité (214).

18. Dispositif de traitement à champ électrique pulsé selon la revendication 1, dans lequel l'interface entre ledit second moyen électrode (208, 308), ledit moyen séparateur diélectrique (218, 318) et ledit produit alimentaire pompable est supprimée de la zone du champ électrique fort entre lesdits premier et second moyens électrodes (202, 302, 208, 308) dans ladite zone de traitement par champ électrique sensiblement uniforme (210, 310).

19. Dispositif de traitement à champ électrique pulsé selon la revendication 16, dans lequel l'interface entre ledit second moyen électrode (208, 308), ledit moyen séparateur diélectrique (218, 318) et ledit produit alimentaire pompable est supprimée de la zone du champ électrique fort entre lesdits premier et second moyens électrodes (202, 302, 208, 308) dans ladite zone de traitement par champ électrique sensiblement uniforme (210, 310) et est située sur ladite surface conique ou incurvée dudit second moyen électrode (208, 308) près de ladite extrémité adjacente à ladite tige conductrice (216, 316) de telle façon que l'espacement entre ladite interface et ledit premier moyen électrode (202, 302) sur ladite interface soit supérieur à la distance entre lesdits premier et second moyens électrodes (201, 302, 208, 308) dans ladite zone de traitement (210, 310)

20. Dispositif de traitement à champ électrique pulsé selon la revendication 1, dans lequel ledit moyen séparateur diélectrique (218, 318) possède une longueur de passage de surface minimale le long du passage entre les surfaces, dans ladite cellule de traitement (200, 300), desdits premier (202, 302) et second (208, 308) moyens électrodes d'au moins deux fois la distance entre lesdits premier et second moyens électrodes (202, 302, 208, 308) dans ladite zone de traitement (210, 310).

FIG. 1

200

222 214 202 204 220

206 216

218 204

208 210 212

FIG. 2

300

320 304 302

316 310 306

318 308

304 312

FIG. 3

FIG. 4

FIG. 5

EP 0 594 566 B1

FIG. 7

FIG. 6

FIG.8A

FIG.8B

FIG.8C

27

FIG. 8D

FIG. 8E

FIG.9

FIG.10

FIG.11

FIG.12

FIG. 13

FIG. 14

FIG. 15

FIG. 16

PRODUCT FLOW

PULSER OF VOLTAGE $V_O$

FIG. 17

FIG. 18

CELL RESISTANCE

ELECTRIC FIELD IN PET CELL

FIG. 19

FIG. 20

EP 0 594 566 B1

1.6 Ω 5 SECTIONS

FIG. 21

1.6 Ω 3 SECTIONS

FIG. 22

1.0 Ω 3 SECTIONS

FIG. 23

FIG. 24

FIG. 25

FIG. 26

FIG. 27